# EUROPEAN PATENT APPLICATION

(11) **EP 4 718 881 A1**
(43) Date of publication of application: **01.04.2026**
(21) Application number: 24847914.9
(22) Date of filing: 02.07.2024
(51) Int. Cl.: H04W 4/02, H04L 67/52, H04W 4/029, H04W 4/80, H04W 12/02, H04W 4/06, H04W 12/63

(54) **METHOD FOR ACQUIRING POSITION INFORMATION OF DEVICE, AND DEVICE AND SYSTEM**

(30) Priority: 28.07.2023 CN 202310956865
(71) Applicant: Huawei Technologies Co., Ltd., Shenzhen, Guangdong 518129 (CN)
(72) Inventor: WANG, Liang, Shenzhen, Guangdong 518129 (CN); LI, Ying, Shenzhen, Guangdong 518129 (CN); YANG, Yuxin, Shenzhen, Guangdong 518129 (CN); KUANG, Huogen, Shenzhen, Guangdong 518129 (CN); CHEN, Senjun, Shenzhen, Guangdong 518129 (CN)
(74) Representative: Grünecker Patent- und Rechtsanwälte PartG mbB
(86) International application number: PCT/CN2024/103188
(87) International publication number: WO 2025/025954

(57) **Abstract**

This application discloses a method for obtaining device location information, a device, and a system, which relate to the field of terminal technologies, to help a user quickly find a lost terminal device by providing a more economical, simpler, and easier-to-implement solution for obtaining location information of the terminal device that is powered off after being lost,. In this application, software (for example, pin control logic) is improved based on existing hardware of the terminal device to normally supply power to and enable a related power-off findable module, for example, a Bluetooth chip, an ultra-wideband radio (ultra-wideband radio, UWB) chip, or an audio amplifier, after the terminal device is powered off due to being lost, so that the module can work normally, thereby helping the user quickly find the terminal device. This improves user experience.

## Description

This application claims priority to Chinese Patent Application No. 202310956865.4, filed with the China National Intellectual Property Administration on July 28, 2023 and entitled "METHOD FOR OBTAINING DEVICE LOCATION INFORMATION, DEVICE, AND SYSTEM", which is incorporated herein by reference in its entirety.

### TECHNICAL FIELD

This application relates to the field of terminal technologies, and in particular, to a method for obtaining device location information, a device, and a system.

### BACKGROUND

With popularization of terminal devices such as mobile phones, smartwatches, and tablet computers, people usually have a plurality of terminal devices for daily life and work. When a user uses a terminal device, the terminal device may be powered off after being lost, for example, the user accidentally leave the terminal device behind in a location where the terminal device is later powered off due to a low battery level or damage, or the terminal device of the user is maliciously stolen by someone and powered off.

In a possible implementation, a "Good Samaritan" solution may be used to help the user successfully find the terminal device in the foregoing scenario in which the terminal device is powered off after being lost. For example, the lost terminal device may send a Bluetooth broadcast after being powered off, and after finding the Bluetooth broadcast through scanning, another surrounding terminal device may send location information of the terminal device or the surrounding terminal device to a cloud, so that the cloud can obtain a location of the lost terminal device and remind the user.

However, it is known that after the terminal device is powered off, a battery of the terminal device usually does not supply power to another module, for example, a Bluetooth chip, and the Bluetooth chip that does not obtain an enabling signal naturally cannot send a Bluetooth broadcast. Therefore, how to maintain power supply to the Bluetooth chip after the terminal device is powered off is a problem that needs to be resolved.

### SUMMARY

This application provides a method for obtaining device location information, a device, and a system, to help a user quickly find a lost terminal device by providing a more economical, simpler, and easier-to-implement solution for obtaining location information of the terminal device that is powered off after being lost.

To achieve the foregoing objectives, the following technical solutions are used in this application.

According to a first aspect, a method for obtaining device location information is provided. The method is applied to an electronic device, for example, a first device. The first device includes a battery, a power management module, a processor, and a communication chip. The method includes: The processor sends a first signal to the power management module in response to a first condition. The power management module indicates, based on the first signal, the communication chip to enter or maintain an enabled state, where the first device is powered off after the processor is powered off; and after the first device is powered off, the communication chip is in the enabled state. The communication chip in the enabled state obtains electric energy from the battery, and sends a broadcast signal based on a first broadcast parameter.

When the communication chip is in the enabled state, the communication chip can work normally by using the electric energy from the battery, including sending the broadcast signal based on the first broadcast parameter.

For example, the first condition is usually used to trigger the first device to power off. For example, the first condition may be that the first device receives a power-off operation, or a battery level of the first device is less than a preset battery level threshold, or the first device meets a preset condition (for example, meets a scheduled power-off condition).

For example, the power management module may include a control logic unit or a control logic module that is provided with power-off findable control logic, and is configured to: manage and execute the power-off findable control logic. When receiving the first signal from the processor, the power management module may start the power-off findable control logic to indicate the communication chip to enter or maintain the enabled state.

By improving software (for example, the power-off findable control logic) of the power management module, the solution provided in the first aspect can supply power to and enable the communication chip of the powered-off first device at extremely low costs based on existing hardware of the first device, resulting in a simple and time-efficient improvement process. Therefore, a more economical, simpler, and easier-to-implement solution for obtaining location information of the first device that is powered off after being lost can be provided, to help a user quickly find the lost first device.

In a possible implementation, the processor may include a first system power management interface, the power management module may include a second system power management interface, and the first system power management interface is connected to the second system power management interface. That the processor sends the first signal to the power management module includes: The processor sends the first signal to the power management module through the first system power management interface. For example, the first system power management interface is a system power management interface (system power management interface, SPMI), and the second system power management interface is an SPMI interface. In view of this, the software (for example, pin control logic) of the power management module is improved, so that the processor indicates, based on the first signal before the first device is powered off, the power management module to start the power-off findable control logic, to ensure that the power management module can normally supply power to and enable the communication chip after the first device is powered off subsequently. In this way, the communication chip can work normally, for example, send a broadcast signal. This help the user quickly and successfully find a lost terminal device by using a "Good Samaritan" solution.

In a possible implementation, the power management module includes a first general-purpose input/output interface, the communication chip includes a first enable pin, and the first general-purpose input/output interface is connected to the first enable pin. That the power management module indicates, based on the first signal, the communication chip to enter or maintain the enabled state includes: The power management module indicates, based on the first signal and through the first general-purpose input/output interface, the communication chip to enter or maintain the enabled state. For example, the first general-purpose input/output interface is a general-purpose input/output (general-purpose input/output, for example, GPIO) interface. For example, the communication chip is a Bluetooth chip, and the first enable pin is a BT_EN. In view of this, the software (for example, the pin control logic) of the power management module is improved, so that the power management module can normally supply power to and enable the communication chip after the first device is powered off. In this way, the communication chip can work normally, for example, send a broadcast signal. This helps the user quickly and successfully find the lost terminal device by using the "Good Samaritan" solution.

In a possible implementation, the first device further includes a distance and angle measurement chip. Before the processor is powered off, the method further includes: The power management module indicates, based on the first signal, the distance and angle measurement chip to enter or maintain an enabled state. This can help the user learn of an accurate location of the first device more precisely and find the lost first device more quickly.

In a possible implementation, the power management module further includes a fourth general-purpose input/output interface, the distance and angle measurement chip includes a second enable pin, and the fourth general-purpose input/output interface is connected to the second enable pin. That the power management module indicates, based on the first signal, the distance and angle measurement chip to enter or maintain the enabled state includes: The power management module controls, based on the first signal, the fourth general-purpose input/output interface to indicate the distance and angle measurement chip to enter or maintain the enabled state. For example, the fourth general-purpose input/output interface is a type of GPIO. For example, the distance and angle measurement chip is an ultra-wideband radio (ultra-wideband radio, UWB) chip, and the second enable pin is UWB_EN. In view of this, the software (for example, the pin control logic) of the power management module is improved, so that the power management module can normally supply power to and enable the distance and angle measurement chip after the first device is powered off. In this way, the distance and angle measurement chip can work normally. This helps the user learn of the accurate location of the first device more precisely, and help the user find the lost first device more quickly.

In a possible implementation, the communication chip further includes a first communication interface, the distance and angle measurement chip further includes a second communication interface, and the first communication interface is connected to the second communication interface. The method further includes: When a second condition is met, the communication chip sends a distance and angle measurement indication to the distance and angle measurement chip through the first communication interface. The distance and angle measurement chip cooperatively performs a distance and angle measurement task on the first device based on the distance and angle measurement indication and a first distance and angle measurement parameter. For example, the first communication interface and the second communication interface are a universal asynchronous receiver/transmitter (universal asynchronous receiver/transmitter, UART) interface. In view of this, the software (for example, the pin control logic) of the power management module is improved, so that the power management module can trigger, based on the preset condition after the first device is powered off, the distance and angle measurement chip to work normally. This helps the user learn of the accurate location of the first device more precisely, and help the user find the lost first device more quickly.

In a possible implementation, the communication chip and the distance and angle measurement chip obtain, from the power management module, the electric energy from the battery. In view of this, a more economical, simpler, and easier-to-implement solution for normally supplying power to the communication chip, the distance and angle measurement chip, and the like after the first device is powered off may be provided, to help the user quickly find the lost terminal device.

In a possible implementation, the first device further includes an audio amplifier and a speaker, the audio amplifier is connected to the speaker, the communication chip includes a fifth general-purpose input/output interface, the audio amplifier includes a sixth general-purpose input/output interface, and the fifth general-purpose input/output interface is connected to the sixth general-purpose input/output interface. The method further includes: When a second condition is met, the communication chip indicates, through the fifth general-purpose input/output interface, the audio amplifier to play a ringtone by using the speaker, where the audio amplifier obtains, from the power management module, the electric energy from the battery. This can help the user find the lost first device more quickly.

For example, a sound waveform is preset in the audio amplifier, and the ringtone played by the speaker is a ringtone corresponding to the sound waveform.

In a possible implementation, that the second condition is met includes: A preset indication is received from a third device, where the first device establishes a communication connection to the third device. In view of this, the first device may play a ringtone as indicated by the third device, to help the user find the lost first device more quickly. For example, the user may enable a ring button on the third device that establishes the communication connection to the first device, and indicate, by using the third device, the first device to ring while ensuring device information security.

In a possible implementation, that the second condition is met further includes: The third device and the first device log in to a same cloud server account. In view of this, on a premise of ensuring device information security, the third device may indicate the first device to ring, to help the user find the lost first device more quickly.

In a possible implementation, the method further includes: The processor sends the first broadcast parameter to the communication chip in response to the first condition, where the first condition includes: The first device receives a power-off operation, or a battery level of the first device is less than a preset battery level threshold, or a preset condition is met. This can ensure that after the first device is powered off, the communication chip sends the broadcast signal based on a broadcast parameter preset in the processor, thereby ensuring that the first device is successfully found.

According to a second aspect, a method for obtaining device location information is provided. The method is applied to an electronic device, for example, a first device. The first device includes a battery, a processor, and a communication chip. The processor includes a seventh general-purpose input/output interface. The communication chip includes a first enable pin and an eighth general-purpose input/output interface. The seventh general-purpose input/output interface is connected to the first enable pin. The eighth general-purpose input/output interface is connected to the first enable pin. The method includes: In response to a first condition, the processor indicates, through the seventh general-purpose input/output interface, the communication chip to enter or maintain an enabled state, where the first device is powered off after the processor is powered off. After the first device is powered off, the communication chip maintains the first enable pin at a high level through the eighth general-purpose input/output interface, so that the communication chip is in the enabled state. The communication chip in the enabled state obtains electric energy from the battery, and sends a broadcast signal based on a first broadcast parameter.

When the communication chip is in the enabled state, the communication chip can work normally by using the electric energy from the battery, including sending the broadcast signal based on the first broadcast parameter.

For example, the first condition is usually used to trigger the first device to power off. For example, the first condition may be that the first device receives a power-off operation, or a battery level of the first device is less than a preset battery level threshold, or the first device meets a preset condition (for example, meets a scheduled power-off condition).

For example, the seventh general-purpose input/output interface and the eighth general-purpose input/output interface are GPIOs. For example, the communication chip is a Bluetooth chip, and the first enable pin is a BT_EN.

By improving power-off findable control logic of a power conversion module and the communication chip, the solution provided in the second aspect can supply power to and enable the communication chip of the powered-off first device at low hardware costs, resulting in a simple and time-efficient improvement process. Therefore, a more economical, simpler, and easier-to-implement solution for obtaining location information of the first device that is powered off after being lost can be provided, to help a user quickly find the lost first device.

In a possible implementation, the first device further includes a distance and angle measurement chip, the communication chip further includes a ninth general-purpose input/output interface, the distance and angle measurement chip includes a third enable pin, and the ninth general-purpose input/output interface is connected to the third enable pin. The method further includes: After the first device is powered off, the communication chip controls, through the ninth general-purpose input/output interface, the distance and angle measurement chip to be in an enabled state. For example, the ninth general-purpose input/output interface is a GPIO. For example, the distance and angle measurement chip is a UWB chip, and the third enable pin is UWB_EN. In view of this, pin control logic of the communication chip and the distance and angle measurement chip is improved, so that the communication chip can normally enable the distance and angle measurement chip after the first device is powered off. In this way, the distance and angle measurement chip can work normally. This helps the user learn of an accurate location of the first device more precisely, and helps the user find the lost first device more quickly.

In a possible implementation, the communication chip further includes a first communication interface, the distance and angle measurement chip further includes a second communication interface, and the first communication interface is connected to the second communication interface. The method further includes: When a second condition is met, the communication chip sends a distance and angle measurement indication to the distance and angle measurement chip through the first communication interface. The distance and angle measurement chip cooperatively performs a distance and angle measurement task on the first device based on the distance and angle measurement indication and a first distance and angle measurement parameter. For example, the first communication interface is a UART interface. In view of this, the pin control logic of the communication chip and the distance and angle measurement chip is improved, so that the communication chip can normally enable the distance and angle measurement chip after the first device is powered off. In this way, the distance and angle measurement chip can work normally. This helps the user learn of the accurate location of the first device more precisely, and helps the user find the lost first device more quickly.

In a possible implementation, the first device further includes a power conversion module, and the communication chip and the distance and angle measurement chip obtain, from the power conversion module, the electric energy from the battery. In view of this, a more economical, simpler, and easier-to-implement solution for normally supplying power to the communication chip, the distance and angle measurement chip, and the like after the first device is powered off may be provided, to help the user quickly find the lost terminal device.

In a possible implementation, the first device further includes an audio amplifier and a speaker, the audio amplifier is connected to the speaker, the communication chip includes a fifth general-purpose input/output interface, the audio amplifier includes a sixth general-purpose input/output interface, and the fifth general-purpose input/output interface is connected to the sixth general-purpose input/output interface. The method further includes: When a second condition is met, the communication chip indicates, through the fifth general-purpose input/output interface, the audio amplifier to play a ringtone by using the speaker, where the audio amplifier obtains, from the power conversion module, the electric energy from the battery. For example, the fifth general-purpose input/output interface and the sixth general-purpose input/output interface are GPIOs. This can help the user find the lost first device more quickly.

For example, a sound waveform is preset in the audio amplifier, and the ringtone played by the speaker is a ringtone corresponding to the sound waveform.

In a possible implementation, that the second condition is met includes: A preset indication is received from a third device, where the first device establishes a communication connection to the third device. In view of this, the first device may play a ringtone as indicated by the third device, to help the user find the lost first device more quickly. For example, the user may enable a ring button on the third device that establishes the communication connection to the first device, and indicate, by using the third device, the first device to ring while ensuring device information security.

In a possible implementation, that the second condition is met further includes: The third device and the first device log in to a same cloud server account. In view of this, on a premise of ensuring device information security, the third device may indicate the first device to ring, to help the user find the lost first device more quickly.

In a possible implementation, the method further includes: The processor sends the first broadcast parameter to the communication chip in response to the first condition, where the first condition includes: The first device receives a power-off operation, or a battery level of the first device is less than a preset battery level threshold, or a preset condition is met. This can ensure that after the first device is powered off, the communication chip sends the broadcast signal based on a broadcast parameter preset in the processor, thereby ensuring that the first device is successfully found.

According to a third aspect, an electronic device, for example, a first device, is provided. The first device includes: a processor, a power management module, and a communication chip. The processor is configured to send a first signal to the power management module in response to a first condition. The power management module is configured to indicate, based on the first signal, the communication chip to enter or maintain an enabled state. The communication chip is configured to: maintain the enabled state after the processor is powered off and the first device is powered off, obtain electric energy from a battery, and send a broadcast signal based on a first broadcast parameter. The battery is configured to supply power to each module in the first device, for example, supply power to the communication chip after the first device is powered off.

By improving software of the power management module, the solution provided in the third aspect can supply power to and enable the communication chip of the powered-off first device at extremely low costs based on existing hardware of the first device, resulting in a simple and time-efficient improvement process. Therefore, a more economical, simpler, and easier-to-implement solution for obtaining location information of the first device that is powered off after being lost can be provided, to help a user quickly find the lost first device.

In a possible implementation, the processor may include a first system power management interface, the power management module may include a second system power management interface, and the first system power management interface is connected to the second system power management interface. The processor is specifically configured to send the first signal to the power management module through the first system power management interface. In view of this, the software (for example, pin control logic) of the power management module is improved, so that the processor indicates, based on the first signal before the first device is powered off, the power management module to start power-off findable control logic, to ensure that the power management module can normally supply power to and enable the communication chip after the first device is powered off subsequently. In this way, the communication chip can work normally, for example, send a broadcast signal. This help the user quickly and successfully find a lost terminal device by using a "Good Samaritan" solution.

In a possible implementation, the power management module includes a first general-purpose input/output interface, the communication chip includes a first enable pin, and the first general-purpose input/output interface is connected to the first enable pin. The power management module is specifically configured to indicate, based on the first signal and through the first general-purpose input/output interface, the communication chip to enter or maintain the enabled state. In view of this, the software (for example, the pin control logic) of the power management module is improved, so that the power management module can normally supply power to and enable the communication chip after the first device is powered off. In this way, the communication chip can work normally, for example, send a broadcast signal. This helps the user quickly and successfully find the lost terminal device by using the "Good Samaritan" solution.

In a possible implementation, the first device further includes a distance and angle measurement chip. Before the processor is powered off, the power management module is further configured to indicate, based on the first signal, the distance and angle measurement chip to enter or maintain an enabled state. This can help the user learn of an accurate location of the first device more precisely and find the lost first device more quickly.

In a possible implementation, the power management module further includes a fourth general-purpose input/output interface, the distance and angle measurement chip includes a second enable pin, and the fourth general-purpose input/output interface is connected to the second enable pin. The power management module is specifically configured to control, based on the first signal, the fourth general-purpose input/output interface to indicate the distance and angle measurement chip to enter or maintain the enabled state. In view of this, the software (for example, the pin control logic) of the power management module is improved, so that the power management module can normally supply power to and enable the distance and angle measurement chip after the first device is powered off. In this way, the distance and angle measurement chip can work normally. This helps the user learn of the accurate location of the first device more precisely, and help the user find the lost first device more quickly.

In a possible implementation, the communication chip further includes a first communication interface, the distance and angle measurement chip further includes a second communication interface, and the first communication interface is connected to the second communication interface. The communication chip is further configured to: when a second condition is met, send a distance and angle measurement indication to the distance and angle measurement chip through the first communication interface. The distance and angle measurement chip is configured to: cooperatively perform a distance and angle measurement task on the first device based on the distance and angle measurement indication and a first distance and angle measurement parameter. In view of this, the software (for example, the pin control logic) of the power management module is improved, so that the power management module can trigger, based on the preset condition after the first device is powered off, the distance and angle measurement chip to work normally. This helps the user learn of the accurate location of the first device more precisely, and help the user find the lost first device more quickly.

In a possible implementation, the communication chip and the distance and angle measurement chip obtain, from the power management module, the electric energy from the battery. In view of this, a more economical, simpler, and easier-to-implement solution for normally supplying power to the communication chip, the distance and angle measurement chip, and the like after the first device is powered off may be provided, to help the user quickly find the lost terminal device.

In a possible implementation, the first device further includes an audio amplifier and a speaker, the audio amplifier is connected to the speaker, the communication chip includes a fifth general-purpose input/output interface, the audio amplifier includes a sixth general-purpose input/output interface, and the fifth general-purpose input/output interface is connected to the sixth general-purpose input/output interface. The communication chip is further configured to: when a second condition is met, indicate, through the fifth general-purpose input/output interface, the audio amplifier to play a ringtone by using the speaker, where the audio amplifier obtains, from the power management module, the electric energy from the battery. This can help the user find the lost first device more quickly.

For example, a sound waveform is preset in the audio amplifier, and the ringtone played by the speaker is a ringtone corresponding to the sound waveform.

According to a fourth aspect, a terminal device, for example, a first device, is provided. The first device includes: a battery, a processor, and a communication chip. The processor includes a seventh general-purpose input/output interface. The communication chip includes a first enable pin and an eighth general-purpose input/output interface. The seventh general-purpose input/output interface is connected to the first enable pin. The eighth general-purpose input/output interface is connected to the first enable pin. The processor is configured to: in response to a first condition, indicate, through the seventh general-purpose input/output interface, the communication chip to enter or maintain an enabled state. The communication chip is configured to: after the processor is powered off and the first device is powered off, maintain the first enable pin at a high level through the eighth general-purpose input/output interface, so that the communication chip is in the enabled state, obtain electric energy from the battery, and send a broadcast signal based on a first broadcast parameter.

By improving power-off findable control logic of a power conversion module and the communication chip, the solution provided in the fourth aspect can supply power to and enable the communication chip of the powered-off first device at low hardware costs, resulting in a simple and time-efficient improvement process. Therefore, a more economical, simpler, and easier-to-implement solution for obtaining location information of the first device that is powered off after being lost can be provided, to help a user quickly find the lost first device.

In a possible implementation, the first device further includes a distance and angle measurement chip, the communication chip further includes a ninth general-purpose input/output interface, the distance and angle measurement chip includes a third enable pin, and the ninth general-purpose input/output interface is connected to the third enable pin. The communication chip is further configured to: after the first device is powered off, control, through the ninth general-purpose input/output interface, the distance and angle measurement chip to be in an enabled state. In view of this, pin control logic of the communication chip and the distance and angle measurement chip is improved, so that the communication chip can normally enable the distance and angle measurement chip after the first device is powered off. In this way, the distance and angle measurement chip can work normally. This helps the user learn of an accurate location of the first device more precisely, and helps the user find the lost first device more quickly.

In a possible implementation, the communication chip further includes a first communication interface, the distance and angle measurement chip further includes a second communication interface, and the first communication interface is connected to the second communication interface. The communication chip is further configured to: when a second condition is met, send a distance and angle measurement indication to the distance and angle measurement chip through the first communication interface. The distance and angle measurement chip is further configured to: cooperatively perform a distance and angle measurement task on the first device based on the distance and angle measurement indication and a first distance and angle measurement parameter. In view of this, the pin control logic of the communication chip and the distance and angle measurement chip is improved, so that the communication chip can normally enable the distance and angle measurement chip after the first device is powered off. In this way, the distance and angle measurement chip can work normally. This helps the user learn of the accurate location of the first device more precisely, and helps the user find the lost first device more quickly.

In a possible implementation, the first device further includes a power conversion module, configured to provide the electric energy from the battery for the communication chip and the distance and angle measurement chip. In view of this, a more economical, simpler, and easier-to-implement solution for normally supplying power to the communication chip, the distance and angle measurement chip, and the like after the first device is powered off may be provided, to help the user quickly find the lost terminal device.

In a possible implementation, the first device further includes an audio amplifier and a speaker, the audio amplifier is connected to the speaker, the communication chip includes a fifth general-purpose input/output interface, the audio amplifier includes a sixth general-purpose input/output interface, and the fifth general-purpose input/output interface is connected to the sixth general-purpose input/output interface. The communication chip is further configured to: when a second condition is met, indicate, through the fifth general-purpose input/output interface, the audio amplifier to play a ringtone by using the speaker, where the audio amplifier obtains, from the power conversion module, the electric energy from the battery. This can help the user find the lost first device more quickly.

For example, a sound waveform is preset in the audio amplifier, and the ringtone played by the speaker is a ringtone corresponding to the sound waveform.

According to a fifth aspect, a computer-readable storage medium is provided. The computer-readable storage medium stores computer program instructions. When the computer program instructions are executed by a processor, the method according to any one of the possible implementations of the first aspect or the second aspect is implemented.

According to a sixth aspect, a computer program product including instructions is provided, and when the computer program product runs on a computer, the computer is caused to implement the method according to any one of the possible implementations of the first aspect or the second aspect.

### BRIEF DESCRIPTION OF DRAWINGS

FIG. 1 is a diagram of an implementation architecture in which a terminal device in a power-off state supplies power to a Bluetooth chip according to an embodiment of this application;
FIG. 2 is a diagram of a hardware structure of a terminal device according to an embodiment of this application;
FIG. 3 is a diagram of a software structure of a terminal device according to an embodiment of this application;
FIG. 4 is a diagram of a network architecture according to an embodiment of this application;
FIG. 5 is a diagram of another network architecture according to an embodiment of this application;
FIG. 6 is a flowchart of a method for obtaining device location information according to an embodiment of this application;
FIG. 7 is a diagram of a findable function interface according to an embodiment of this application;
FIG. 8 is a flowchart of another method for obtaining device location information according to an embodiment of this application;
FIG. 9 is a diagram of two location information display interfaces of a lost device according to an embodiment of this application;
FIG. 10 is a diagram 1 of an enabling architecture of a first device according to an embodiment of this application;
FIG. 11 is a diagram 1 of an enabling process of a first device according to an embodiment of this application;
FIG. 12 is a diagram 2 of an enabling architecture of a first device according to an embodiment of this application;
FIG. 13A and FIG. 13B are a diagram 2 of an enabling process of a first device according to an embodiment of this application;
FIG. 14 is a diagram 3 of an enabling architecture of a first device according to an embodiment of this application;
FIG. 15A and FIG. 15B are a diagram 3 of an enabling process of a first device according to an embodiment of this application;
FIG. 16 is a diagram 4 of an enabling architecture of a first device according to an embodiment of this application;
FIG. 17 is a diagram 4 of an enabling process of a first device according to an embodiment of this application;
FIG. 18 is a diagram 5 of an enabling architecture of a first device according to an embodiment of this application;
FIG. 19A and FIG. 19B are a diagram 5 of an enabling process of a first device according to an embodiment of this application;
FIG. 20 is a diagram 6 of an enabling architecture of a first device according to an embodiment of this application;
FIG. 21A and FIG. 21B are a diagram 6 of an enabling process of a first device according to an embodiment of this application; and
FIG. 22 is a block diagram of a structure of a terminal device according to an embodiment of this application.

### DESCRIPTION OF EMBODIMENTS

The following describes the technical solutions in embodiments of this application with reference to the accompanying drawings in embodiments of this application. In descriptions in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions of embodiments of this application, "a plurality of" means two or more.

In the following, the terms "first", "second", and the like are merely intended to distinguish between different described objects, and impose no limitation on locations, a sequences, priorities, quantities, content, or the like of the described objects. For example, if a described object is a "field", ordinal numbers before "fields" in a "first field" and a "second field" do not limit a location or an order between the "fields". The "first" and the "second" do not limit whether the "fields" modified by the "first" and "second" are in a same message, and the "first" and the "second" do not limit a sequence of the "first field" and the "second field". For another example, if a described object is a "level", ordinal numbers before "levels" in a "first level" and a "second level" do not limit a priority between the "levels". For another example, a quantity of described objects is not limited by an ordinal number, and may be one or more objects. For example, for a "first device", a quantity of "devices" may be one or more. In addition, objects modified by different prefixes may be the same or different. For example, if a described object is a "device", a "first device" and a "second device" may be a same type of device, or different types of devices. For another example, if a described object is "information", "first information" and "second information" may be information about same content or information about different content. In conclusion, in embodiments of this application, use of a prefix word, for example, an ordinal number, used to distinguish between described objects does not constitute a limitation on the described objects. For descriptions of the described objects, refer to the descriptions of the context in the claims or embodiments. The use of such a prefix word should not constitute a redundant limitation.

In addition, in embodiments of this application, "connection" may indicate a direct connection or an indirect connection, or may indicate an electrical connection or a communication connection. For example, a connection between two electrical elements A and B may mean that A is directly connected to B, or may mean that A is indirectly connected to B through another electrical element or a connection medium, or may mean that A is indirectly connected to B through another communication device or a communication medium, provided that A and B can communicate with each other.

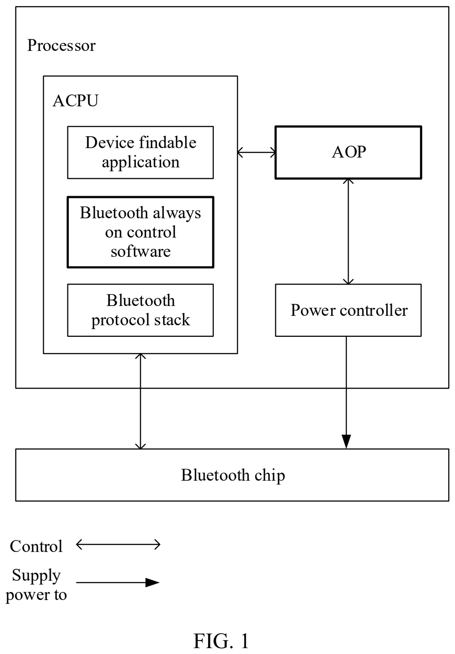

To maintain power supply to a communication chip such as a Bluetooth chip after a terminal device is powered off, enabling the communication chip to send a broadcast signal (for example, a Bluetooth broadcast) for locating the terminal device based on a "Good Samaritan" solution and helping a user successfully find the terminal device, in a possible implementation, the terminal device may supply power to the communication chip of the powered-off terminal device based on an architecture shown in FIG. 1.

For example, the communication chip is a Bluetooth chip. As shown in FIG. 1, the terminal device includes a processor and a Bluetooth chip. The processor includes an application central processing unit (application CPU, ACPU), and the ACPU includes a device findable application, a Bluetooth protocol stack, and Bluetooth always on (for example, Bluetooth low energy (Bluetooth low energy, BLE) always on) control software. As shown in FIG. 1, the processor further includes an always on processor (always on processor, AOP) and a power controller.

The device findable application shown in FIG. 1 is used to provide a device findable function, for example, provide a power-off findable function of a device in a power-off state by using the "Good Samaritan" solution. For example, when the device is in the power-off state, the device findable application may indicate, by using the Bluetooth always on control software, the AOP to maintain power supply to the Bluetooth chip. For example, in the power-off state, the AOP may supply power to the Bluetooth chip by using the power controller, and the Bluetooth chip may send a Bluetooth broadcast based on related specifications of the Bluetooth protocol stack.

However, the device findable solution based on the technology shown in FIG. 1 requires adding an AOP to the processor. Adding the AOP to the processor not only increases design and manufacturing costs of a processing chip but also requires customization of the processor in an early stage. This prolongs a production cycle of the terminal device.

In consideration of finding a powered-off device at low costs, an embodiment of this application provides a method for obtaining device location information. The method enables power supply to a communication chip of a powered-off terminal device at extremely low costs, without requiring customization or modification to a processor of the terminal device, thereby helping a user quickly find the lost terminal device based on a "Good Samaritan" solution.

For example, power-off findable control logic may be added to a power management module (power management unit, PMU) of the terminal device, to control the power management module to still support, after the terminal device is powered off, supplying power to the communication chip configured to send a broadcast signal, for example, a Bluetooth chip or an ultra-wideband radio (ultra-wideband radio, UWB) chip.

For example, a low-cost power conversion module may be added to the terminal device, so that after the terminal device is powered off, a battery can still supply power to the communication chip configured to send a broadcast signal, for example, a Bluetooth chip or a UWB chip. For example, the power conversion module may include but is not limited to a low dropout regulator (low dropout regulator, LDO), a direct current-direct current (direct current-direct current, DC-DC) converter, and the like.

The terminal device in embodiments of this application may include but is not limited to a smartphone, a netbook, a tablet computer, a handwriting tablet, a smartwatch, a smart band, a telephone watch, a smart camera, a palmtop computer, a vehicle-mounted computer, a personal computer (personal computer, PC), a personal digital assistant (personal digital assistant, PDA), a portable multimedia player (portable multimedia player, PMP), an augmented reality (augmented reality, AR)/virtual reality (virtual reality, VR) device, a smart television, a projection device, or a motion sensing game console in a human-computer interaction scenario. Alternatively, the terminal device may be another type or structure of electronic device that has a communication function. This is not limited in this application.

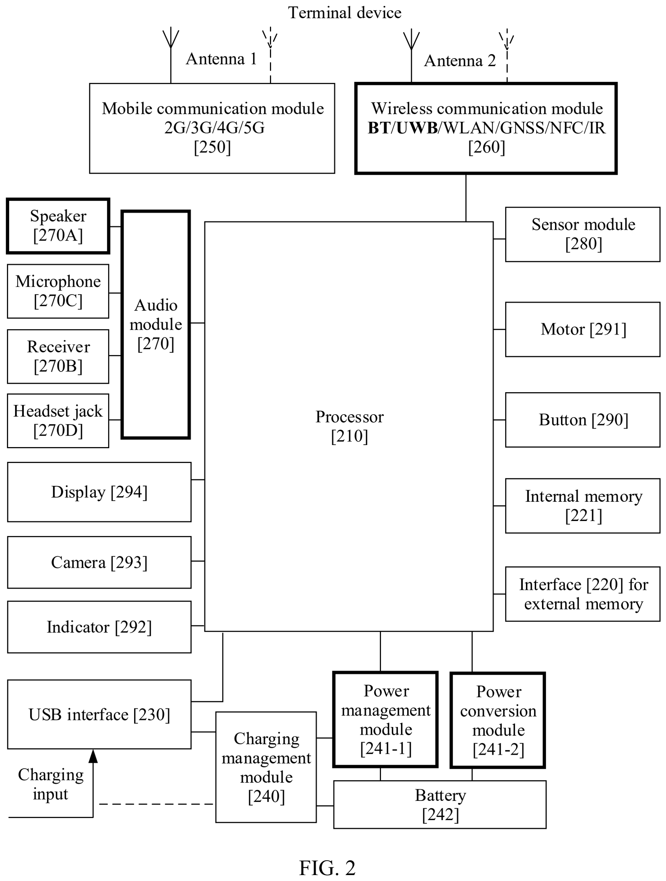

For example, FIG. 2 is a diagram of a hardware structure of a terminal device according to an embodiment of this application.

As shown in FIG. 2, the terminal device may include a processor 210, a memory (including an interface 220 for external memory and an internal memory 221), a universal serial bus (universal serial bus, USB) interface 230, a charging management module 240, a power management module 241-1, a power conversion module 241-2, a battery 242, an antenna 1, an antenna 2, a mobile communication module 250, a wireless communication module 260, an audio module 270, a speaker 270A, a receiver 270B, a microphone 270C, a headset jack 270D, a sensor module 280, a button 290, a motor 291, an indicator 292, a camera 293, a display 294, and the like. The sensor module 280 may include but is not limited to a touch sensor, a pressure sensor, a gyroscope sensor, a barometric pressure sensor, a magnetic sensor, an acceleration sensor, a distance sensor, an optical proximity sensor, a fingerprint sensor, a temperature sensor, an ambient light sensor, a bone conduction sensor, and the like.

It may be understood that the structure shown in this embodiment of the present invention does not constitute a specific limitation on the terminal device. In some other embodiments of this application, the terminal device may include more or fewer components than those shown in the figure, or a combination of some components, or splits from some components, or a different component layout. The components shown in the figure may be implemented by hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a flight controller, a video codec, a digital signal processor (digital signal processor, DSP), a baseband processor, a neural-network processing unit (neural-network processing unit, NPU), and/or the like. Different processing units may be independent components, or may be integrated into one or more processors.

The memory may be further disposed in the processor 210, and is configured to store instructions and data. In some embodiments, the memory in the processor 210 is a cache. The memory may store instructions or data just used or cyclically used by the processor 210. If the processor 210 needs to use the instructions or the data again, the processor may directly invoke the instructions or the data from the memory. This avoids repeated access, reduces waiting time of the processor 210, and therefore improves system efficiency.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

For example, the processor 210 may include a system on chip (system on a chip, SOC), and the foregoing functions of the processor 210 may be implemented by using the SOC.

The charging management module 240 is configured to receive a charging input from a charger. The charger may be a wireless charger or a wired charger. In some embodiments in which the charger is a wired charger, the charging management module 240 may receive a charging input from the wired charger through the USB interface 230. In some embodiments in which the charger is a wireless charger, the charging management module 240 may receive a wireless charging input through a wireless charging coil of the terminal device. The charging management module 240 supplies power to the terminal device through the power management module 241-1 while charging the battery 242.

The power management module 241-1 is configured to connect to the battery 242, the charging management module 240, and the processor 210. The power management module 241-1 receives an input from the battery 242 and/or the charging management module 240, and supplies power to the processor 210, the internal memory 221, the display 294, the camera 293, the wireless communication module 260, and the like. The power management module 241-1 may be further configured to monitor parameters such as a battery capacity, a battery cycle count, and a battery health status (electric leakage or impedance). In some other embodiments, the power management module 241-1 may alternatively be disposed in the processor 210. In some other embodiments, the power management module 241-1 and the charging management module 240 may alternatively be disposed in a same component.

In this embodiment of this application, the power management module 241-1 may be further configured to supply power to a Bluetooth chip, a UWB chip, the speaker 270A, and the like.

The power conversion module 241-2 is configured to perform voltage conversion, for example, convert a voltage provided by a battery into a voltage adapted to a Bluetooth chip. For example, the power conversion module is an LDO, a DC-DC converter, or the like. In some embodiments, the power conversion module 241-2 may be disposed in the power management module 241-1. Certainly, the power conversion module 241-2 may alternatively be independent of the power management module 241-1. This is not limited in embodiments of this application.

A wireless communication function of the terminal device may be implemented through the antenna 1, the antenna 2, the mobile communication module 250, the wireless communication module 260, the modem processor, the baseband processor, and the like.

The antenna 1 and the antenna 2 are configured to: transmit and receive an electromagnetic wave signal. Each antenna in the terminal device may be configured to cover one or more communication frequency bands. Different antennas may be further multiplexed, to improve antenna utilization. For example, the antenna 1 may be reused as a diversity antenna of a wireless local area network. In some other embodiments, the antenna may be used in combination with a tuning switch.

The mobile communication module 250 may provide a wireless communication solution that is applied to the terminal device and that includes 2G/3G/4G/5G or the like. The mobile communication module 250 may include at least one filter, a switch, a power amplifier, a low noise amplifier (low noise amplifier, LNA), and the like. The mobile communication module 250 may receive an electromagnetic wave through the antenna 1, perform processing such as filtering or amplification on the received electromagnetic wave, and transmit the electromagnetic wave to the modem processor for demodulation. The mobile communication module 250 may further amplify a signal modulated by the modem processor, and convert the signal into an electromagnetic wave for radiation through the antenna 1. In some embodiments, at least some functional modules in the mobile communication module 250 may be disposed in the processor 210. In some embodiments, at least some functional modules in the mobile communication module 250 may be disposed in a same component as at least some modules in the processor 210.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 270A, the receiver 270B, or the like), or displays an image or a video on the display 294. In some embodiments, the modem processor may be an independent component. In some other embodiments, the modem processor may be independent of the processor 210, and is disposed in a same component as the mobile communication module 250 or another functional module.

The wireless communication module 260 may provide a wireless communications solution that is applied to a terminal device and includes a wireless local area network (wireless local area network, WLAN) (for example, a Wi-Fi network), Bluetooth (Bluetooth, BT), UWB, a global navigation satellite system (global navigation satellite system, GNSS), a near field communication (near field communication, NFC) technology, an infrared (infrared, IR) technology, and the like. The wireless communication module 260 may be one or more components integrating at least one communication processor module. The wireless communication module 260 receives an electromagnetic wave through the antenna 2, performs frequency modulation and filtering processing on the electromagnetic wave signal, and sends a processed signal to the processor 210. The wireless communication module 260 may further receive a to-be-sent signal from the processor 210, perform frequency modulation and amplification on the signal, and convert the signal into an electromagnetic wave for radiation through the antenna 2.

In some embodiments of this application, the wireless communication module 260 may include a Bluetooth chip, configured to provide Bluetooth wireless communication, for example, send a Bluetooth broadcast and/or receive a Bluetooth broadcast.

In some embodiments of this application, the wireless communication module 260 may include a UWB chip, configured to provide ultra-wideband radio communication, for example, send an ultra-wideband signal and/or receive an ultra-wideband signal.

In some embodiments, in the terminal device, the antenna 1 and the mobile communication module 250 are coupled, and the antenna 2 and the wireless communication module 260 are coupled, so that the terminal device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The terminal device implements a display function through the GPU, the display 294, the application processor, and the like. The GPU is a microprocessor for image processing, and is connected to the display 294 and the application processor. The GPU is configured to: perform mathematical and geometric computation, and render an image. The processor 210 may include one or more GPUs that execute program instructions to generate or change displayed information.

The display 294 is configured to display an image, a video, and the like. The display 294 includes a display panel. In some embodiments, the terminal device may include one or N displays 294, where N is a positive integer greater than 1.

The interface 220 for external memory may be configured to connect to an external memory card, for example, a micro SD card, to expand a storage capability of the terminal device. The external storage card communicates with the processor 210 through the interface 220 for external memory, to implement a data storage function.

The internal memory 221 may be configured to store computer-executable program code. For example, a computer program may include an operating system program and an application. The operating system may include but is not limited to operating systems such as Symbian^{®} (Symbian^{®}), Android^{®} (Android^{®}), Microsoft^{®} Windows^{®}, Apple iOS^{®}, Blackberry^{®} (Blackberry^{®}), and Harmony^{®} (Harmony^{®}) OS. The executable program code includes instructions. The processor 210 runs the instructions stored in the internal memory 221, to perform various function applications and data processing of the terminal device. The internal memory 221 may include a program storage area and a data storage area. The program storage area may store an operating system, an application required by at least one function, and the like. The data storage area may store data (for example, a broadcast parameter, distance and angle measurement parameters, and a key pair) and the like created during use of the terminal device. In addition, the internal memory 221 may include a high-speed random access memory, or may include a non-volatile memory, for example, at least one magnetic disk storage device, a flash memory device, or a universal flash storage (universal flash storage, UFS). The processor 210 runs the instructions stored in the internal memory 221 and/or the instructions stored in the memory disposed in the processor, to perform various function applications and data processing of the terminal device.

The terminal device may implement an audio function such as music playing or recording by using the audio module 270, the speaker 270A, the receiver 270B, the microphone 270C, the application processor, and the like. For specific working principles and functions of the audio module 270, the speaker 270A, the receiver 270B, and the microphone 270C, refer to descriptions in the conventional technology.

The audio module 270 is configured to convert digital audio information into an analog audio signal for output, and is also configured to convert an analog audio input into a digital audio signal. The audio module 270 may be further configured to: encode and decode an audio signal. In some embodiments, the audio module 270 may be disposed in the processor 210, or some functional modules in the audio module 270 are disposed in the processor 210.

The speaker 270A, also referred to as a "loudspeaker", is configured to convert an audio electrical signal into a sound signal. The terminal device may be used to listen to music or answer a call in a hands-free mode over the speaker 270A.

In addition, for descriptions of hardware such as the button 290, the motor 291, and the indicator 292, refer to the conventional technology. Details are not described again in embodiments of this application.

It may be understood that the structure shown in FIG. 2 in this application does not constitute a specific limitation on the terminal device. In some other embodiments of this application, the terminal device may include more or fewer components than those shown in the figure, or a combination of some components, or splits from some components, or a different component layout. The components shown in the figure may be implemented by hardware, software, or a combination of software and hardware.

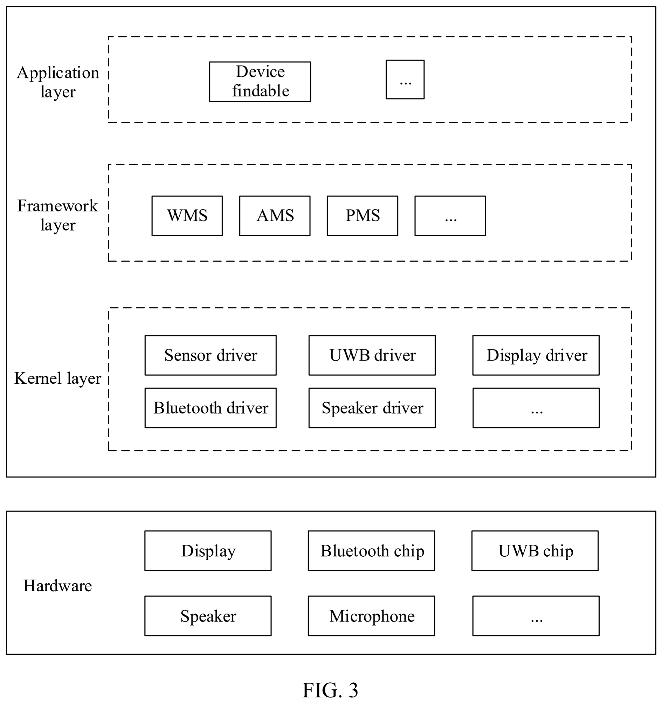

In a possible example, FIG. 3 is a diagram of a software structure of a terminal device according to an embodiment of this application. As shown in FIG. 3, an operating system of the terminal device may include an application layer, a framework (framework, FWK) layer, and a kernel layer.

The application layer may include a series of applications, for example, a device findable application shown in FIG. 3. Certainly, applications at the application layer may include but are not limited to a word processing system (word processing system, WPS), Email, Camera, Gallery, Calendar, Phone, Map, Navigation, Bluetooth, Music, Video, Messaging, Notepad, a screen projection application, and another application.

The framework layer provides an application programming interface (application programming interface, API) and a programming framework for an application at the application layer. As shown in FIG. 3, the framework layer may provide a window management service (WindowManagerService, WMS), an activity manager service (activity manager service, AMS), a package manager service (package manager service, PMS), and the like.

The window manager service is used to provide window management, for example, creating a window, starting a window, deleting a window, moving a window, and managing a location/size/style of a window.

The activity manager service is responsible for managing an activity, and is responsible for work such as starting, switching, and scheduling of each component in a system, and management and scheduling of applications. Specifically, data classes used to store a process (Process), an activity (Activity), and a task (Task) are defined in the AMS. The data class corresponding to the process (Process) may include process file information, memory status information of the process, an activity, a service, and the like included in the process. Information about an activity can be stored in a task stack (ActivityStack). The ActivityStack is used to schedule activities of an application in a unified manner. The ActivityStack may specifically store information about all running activities. The ActivityStack can also store information about historical activities.

The package manager service may be used to manage a program in a system.

Certainly, the framework layer may be further used to provide another management service, like a content provider service, a phone manager service, a resource manager service, a notification manager service, a location manager service, and a view system (view system). The content provider service is used to support an application in accessing data of another application, or sharing data of the application to another application, where the data may include a video, an image, an audio, calls that are made and answered, a browsing history and a bookmark, a phone book, and the like. The phone manager service is used to provide a method for obtaining an access status and information related to communication of a terminal device, and provide a communication function of the terminal device, for example, call status management (including answering, declining, and the like). The resource manager service is used to provide access to a non-code resource, for example, access to a local character string, an icon, an image, a graph, a video file, or a layout file (Layoutfile). The notification manager service is used to provide a function of displaying customized prompt information in a status bar. The prompt information may be used to convey a notification message, and may automatically disappear after a short pause without requiring a user interaction. The location manager service is used to provide a service related to processing of a geographical location. The view system (view system) may be configured to construct a display interface of an application. The view system includes a visual control, such as a text box (TextBox) control, a list (List) control, a grid (Grid) control, a button (Button) control, and an embeddable web browser control.

The kernel layer is a layer between hardware and software. The kernel layer may include a Bluetooth driver, a UWB driver, a sensor driver, a display driver, a speaker driver, and the like.

In this embodiment of this application, the Bluetooth driver may drive, according to a Bluetooth communication protocol, the Bluetooth chip to send a Bluetooth broadcast, for example, a BLE broadcast or a classic Bluetooth (classic Bluetooth) broadcast; and perform broadcast scanning by using the Bluetooth chip, to obtain a Bluetooth broadcast from another device. The UWB driver may drive, according to a UWB communication protocol, the UWB chip to send a UWB signal, obtain a UWB signal from another device, and the like. The speaker driver may be configured to drive a speaker to play an audio.

It should be noted that FIG. 3 is merely an example of the diagram of the software structure of the terminal device, and merely layers and software modules related to the solutions of this application are simply enumerated. During actual application, the operating system of the terminal device may further include another layer, and each layer may further include another software module configured to realize one or more functions or services. This is not specifically limited in embodiments of this application.

With reference to the accompanying drawings, the following specifically describes a method for obtaining device location information according to an embodiment of this application.

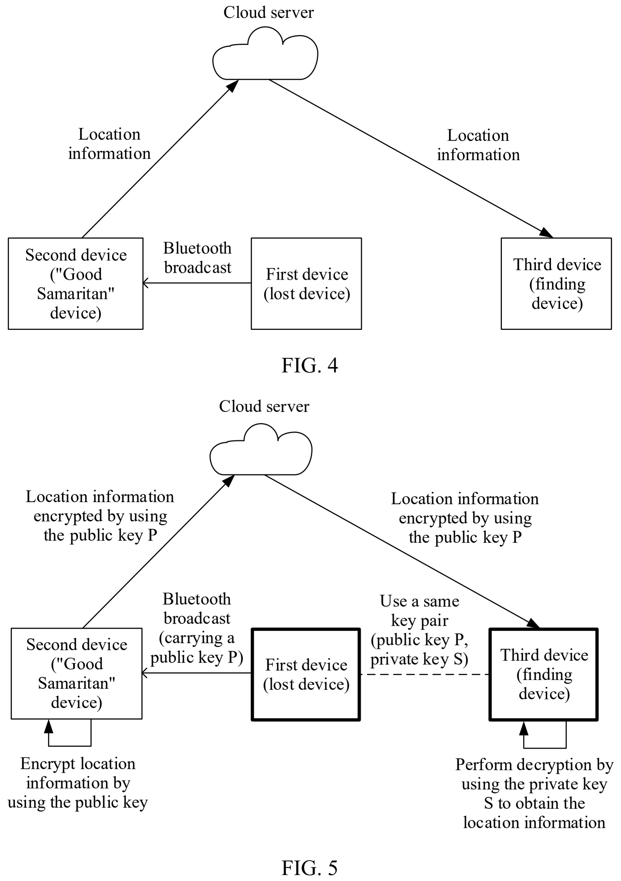

For example, FIG. 4 is a diagram of a network architecture according to an embodiment of this application. As shown in FIG. 4, a method for obtaining device location information provided in an embodiment of this application may be implemented based on a communication system including a first device, a second device, a third device, and a cloud server shown in FIG. 4. As shown in FIG. 4, the first device is a lost terminal device (briefly referred to as a "lost device" below), the second device is a device (briefly referred to as a "Good Samaritan" device below) that finds, through scanning, a broadcast signal (for example, a Bluetooth broadcast) from the lost device, and the third device is a device that initiates finding (briefly referred to as a "finding device" below). The cloud server is configured to provide a related device findable service including a power-off findable service, for example, device location information collection and delivery, device permission verification, key generation, and key synchronization to a device.

For example, the cloud server shown in FIG. 4 may be a server of a device vendor or a third-party server authorized by the device vendor. This is not specifically limited in embodiments of this application.

As shown in FIG. 4, after being powered off, the first device may send a broadcast signal (for example, a Bluetooth broadcast) based on a preset broadcast parameter (for example, a first broadcast parameter). After finding, through scanning, the broadcast signal sent by the first device, the second device within a preset range of the first device may send location information to the cloud server. The location information may be location information of the second device, or may be location information of the first device that is obtained by the second device through calculation based on related information of the received broadcast signal. Further, the cloud server may send the location information to the third device when a user finds the first device by using the third device. In this way, the third device may learn of a specific location of the first device/second device.

It may be understood that, if the second device sends the location information of the second device to the cloud server, because a device that can find the broadcast signal from the first device through scanning is usually within the preset range of the first device, the third device may learn of an approximate range of the first device. This can also help the user narrow a range of searching for the first device. If the second device has a capability of calculating a location of the first device based on the related information of the Bluetooth broadcast from the first device, the second device may alternatively directly send, to the cloud server, the location information of the first device that is obtained through calculation. In this way, the third device can precisely learn of a specific location of the first device.

In some embodiments, to ensure security of the device location information, the first device may transmit the location information based on an asymmetric encryption algorithm. For example, the broadcast signal sent by the first device is a Bluetooth broadcast. As shown in FIG. 5, when sending a Bluetooth broadcast, the first device may carry a first key (for example, a public key P), and the second device may encrypt the location information by using the first key and then send the encrypted location information to the cloud server. The first device may request, from the cloud server by using the public key, the location information encrypted by using the public key. After the cloud server sends the encrypted location information to the third device, the third device decrypts the information by using a second key (for example, a private key S) corresponding to the first key, so that the third device can successfully obtain the location information of the first device/the second device.

In some embodiments, the first key and the second key may be a key pair that is generated by the cloud server and that is used by the first device and the second device when the first device and the second device perform a power-off findable service, for example, information encryption is performed by using the first key, and information decryption is performed by using the second key. For example, the cloud server may generate one key pair for one cloud server account, and synchronize the key pair to a plurality of devices (for example, the first device and the third device) that log in to the cloud server account. All the devices that log in to the cloud server account may use the key pair to perform subsequent information encryption and decryption. Alternatively, the key pair may be generated by a device that logs in to the cloud server account and synchronized to another device that logs in to the cloud server account. A generation manner and a synchronization manner of the key pair are not specifically limited in embodiments of this application.

In some other embodiments, the first key and the second key may be generated by any one of a plurality of terminal devices that log in to a same cloud server account and synchronized to a plurality of devices that log in to the cloud server account.

For example, the first key is a public key P, and the second key is a private key S; or the first key is a private key S, and the second key is a public key P. The public key may include but is not limited to a hash public key.

In some embodiments, a same cloud server account may correspond to a group of key pairs. For example, the same cloud server account may correspond to a group of first keys and one second key. Based on a preset key rotation policy, a terminal device under the account may encrypt information by using a first key in the group of keys and decrypt the information by using the second key. The key rotation policy can enhance security of key use through periodic rotation, thereby implementing security of data protection. For related descriptions of the key pair and the key rotation policy, refer to a conventional technology. This is not specifically limited in embodiments of this application.

It should be noted that, in the foregoing embodiment, an example in which the second device transmits the location information based on the asymmetric encryption algorithm is merely used. However, a specific manner and method of encrypting the location information and decrypting the location information by the second device are not limited in this application. For example, the device may alternatively transmit the location information based on a symmetric encryption algorithm. For example, the second device encrypts the location information by using a key (for example, a private key) negotiated with the first device, and correspondingly, when receiving the encrypted location information, the third device decrypts the location information by using the negotiated key, to obtain the location information.

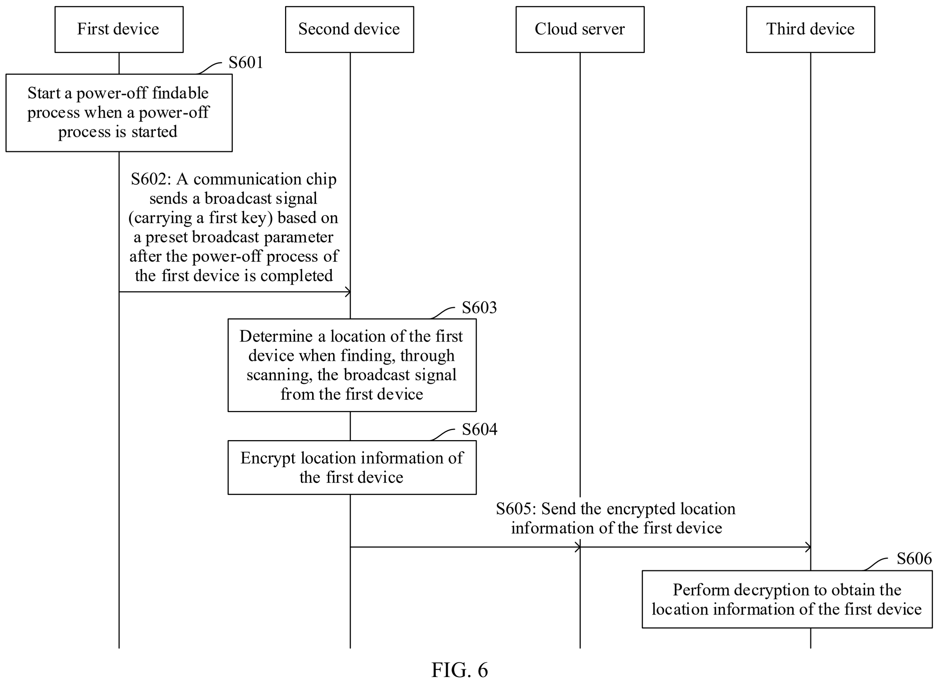

In some embodiments, based on the diagram of the architecture shown in FIG. 5 and an example in which a second device has a capability of calculating a location of a first device, FIG. 6 is a flowchart of a method for obtaining device location information according to an embodiment of this application. As shown in FIG. 6, the method for obtaining device location information provided in this embodiment of this application may be implemented by using S601 to S606.

S601: The first device starts a power-off findable process when a power-off process is started.

The first device enables a power-off findable function.

In this embodiment of this application, the power-off process of the first device may be manually triggered (for example, by manually tapping a power-off button), or may be triggered by a low battery level or a preset condition (for example, a scheduled power-off condition). This is not specifically limited in embodiments of this application.

S602: A communication chip of the first device sends a broadcast signal based on a first broadcast parameter after the power-off process of the first device is completed, where the broadcast signal carries a first key.

The first key is used by the second device to subsequently encrypt location information, to ensure security of the location information. The first key may be a public key or a private key. This is not limited in embodiments of this application.

In the solution provided in this application, after the power-off process of the first device is completed (that is, the first device is powered off), the first device still maintains power supply to the communication chip, to support the communication chip in sending the broadcast signal, so as to locate the first device by using a "Good Samaritan" solution, and help a user successfully find the powered-off first device.

For example, power-off findable control logic may be set in a power management module of the first device. After the power-off process of the first device is completed, the power management module of the first device may continue to supply power to the communication chip, so that the communication chip may send the broadcast signal based on the first broadcast parameter. For example, after the first device is powered off, the power management module of the first device may control, based on the power-off findable control logic, a Bluetooth enable pin to be in an enabled state, so that the communication chip may use electric energy from the power management module to send the broadcast signal based on the first broadcast parameter.

In another example, the first device may include a power conversion module. After the power-off process of the first device is completed, the power conversion module may continue to obtain power from a battery of the first device, convert a voltage of the first device into a voltage that adapts to the communication chip, and supply power to the communication chip, so that the communication chip may send the broadcast signal based on the first broadcast parameter. For example, after the first device is powered off, the power conversion module of the first device may directly obtain the power from the battery of the first device and convert the voltage of the first device into a voltage that adapts to a Bluetooth chip. In addition, the Bluetooth chip may maintain a GPIO interface of the Bluetooth chip at a high level, to maintain the Bluetooth chip in an enabled state, so that the Bluetooth chip may send the broadcast signal based on the first broadcast parameter by using electric energy from the power conversion module. The power conversion module may be an existing hardware module (for example, a hardware module in the power management module) of the first device, or may be a newly added hardware module. This is not limited in embodiments of this application.

It may be understood that, in a solution in which the power management module or the power conversion module is improved to supply power to the communication chip in the power-off state, the improvement to the power management module or the power conversion module relates to only a change of software (for example, pin control logic), resulting in extremely low costs and a simple and time-efficient improvement process. Compared with a solution of adding an AOP shown in FIG. 1, the solution can supply power to the communication chip of the powered-off terminal device at extremely low costs based on existing hardware of the first device, without affecting a production cycle of the terminal device. Alternatively, even if the power conversion module in the first device is a newly added hardware module, due to a simple function to be implemented by the power conversion module, a simple product structure, and the like, a product is mature and costs are usually extremely low. Therefore, compared with a solution of adding an AOP shown in FIG. 1, the solution can supply power to the communication chip of the powered-off terminal device at extremely low costs, without affecting a production cycle of the terminal device.

In some embodiments, in a process in which the first device supplies power to the communication chip after the first device is powered off, the first device may alternatively control the communication chip to be powered off after the communication chip continuously sends a broadcast signal for a period of time (for example, first preset duration), to reduce power consumption of the first device.

A specific manner and a specific process in which the battery of the first device supplies power to the communication chip after the power-off process of the first device is completed are described in detail below with reference to specific embodiments.

The broadcast parameter may include but is not limited to an advertising type, an advertising interval, an advertising window, a scan interval, a scan window, broadcast content, a broadcast content change cycle, and the like.

In some embodiments, that the communication chip of the first device sends the broadcast signal based on the first broadcast parameter may include: The communication chip of the first device sends, within a specified advertising window, a broadcast signal of a specified type including broadcast content, based on an advertising interval specified by the first broadcast parameter. In some embodiments, the communication chip of the first device may further correspondingly change the broadcast content in the broadcast signal based on a specified broadcast content change cycle.

S603: The second device determines the location of the first device when finding, through scanning, the broadcast signal from the first device.

For example, the second device may obtain, through calculation, an orientation of the first device relative to the second device based on strength of the broadcast signal found from the first device through scanning, an indoor positioning algorithm, and a mathematical relationship, to determine the location of the first device. A specific method and process in which the second device determines the location of the first device based on the broadcast signal found from the first device through scanning are not specifically limited in embodiments of this application. For details, refer to a conventional technology.

S604: The second device encrypts location information of the first device.

In some embodiments, the second device may encrypt the location information based on an asymmetric encryption algorithm. For example, the first key is a public key in a key pair, and the second device may encrypt the location information of the first device by using the public key. Correspondingly, a receive end of the encrypted location information, for example, a third device, may decrypt the received information by using a private key in the key pair, to obtain the location information of the first device. For another example, the first key is a private key in a key pair, and the second device may encrypt the location information of the first device by using the private key. Correspondingly, a receive end of the encrypted location information, for example, a third device, may decrypt the received information by using a public key in the key pair, to obtain the location information of the first device.

In some embodiments, the second device may encrypt the location information based on a symmetric encryption algorithm. For example, the second device may encrypt the location information of the first device by using the pre-agreed first key. Correspondingly, a receive end of the encrypted location information, for example, a third device, decrypts the received information by using the first key, to obtain the location information of the first device.

S605: The second device sends the encrypted location information of the first device to the third device by using a cloud server.

The cloud server may be configured to provide a related device findable service including a power-off findable service, for example, device location information collection and delivery, device permission verification, key generation, and key synchronization to a device. For example, the cloud server may be a server of a device vendor or a third-party server authorized by the device vendor. This is not specifically limited in embodiments of this application.

In some embodiments, the third device may request, in response to a first operation of the user, to obtain the location information of the first device from the cloud server. Correspondingly, after performing permission verification on the third device, the cloud server may send the encrypted location information of the first device to the third device. For example, the third device may carry the first key when requesting to obtain the location information of the first device from the cloud server. After performing permission verification on the third device based on the public key, the cloud server sends, to the third device, the location information encrypted by using the first key.

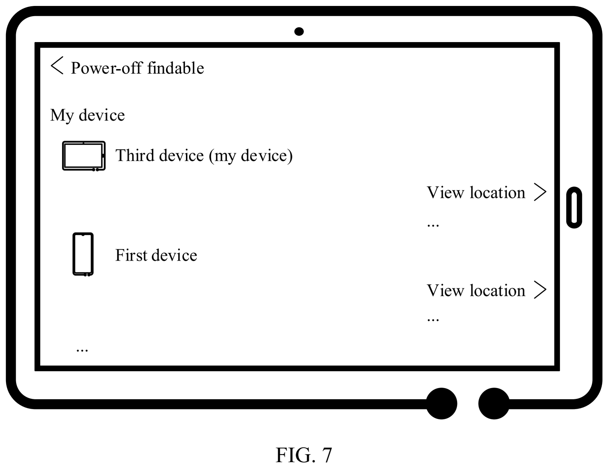

The first operation is used to trigger finding of the first device. For example, the first operation may include but is not limited to an operation of selecting, by the user, to find the first device or an operation of selecting to view the location of the first device on a power-off findable function interface of the third device, a voice instruction instructing to find the first device, a preset gesture operation, a preset slide operation, a preset tap operation, a preset body action, a preset facial expression, or the like. This is not specifically limited in embodiments of this application. For example, FIG. 7 shows an example of an operation interface on which the user selects to find the first device on the power-off findable function interface of the third device. The first operation may be that the user taps a view location option of the first device on the operation interface shown in FIG. 7.

S606: The third device performs decryption to obtain the location information of the first device.

For example, if the first device encrypts the location information based on the asymmetric encryption algorithm, when receiving the location information that is of the first device and that is encrypted by using the first key, the third device may decrypt the received encrypted location information of the first device by using the second key corresponding to the first key, to successfully obtain the location information of the first device.

If the first device encrypts the location information based on the symmetric encryption algorithm, when receiving the location information that is of the first device and that is encrypted by using the first key, the third device may decrypt the received encrypted location information of the first device by using the first key, to successfully obtain the location information of the first device.

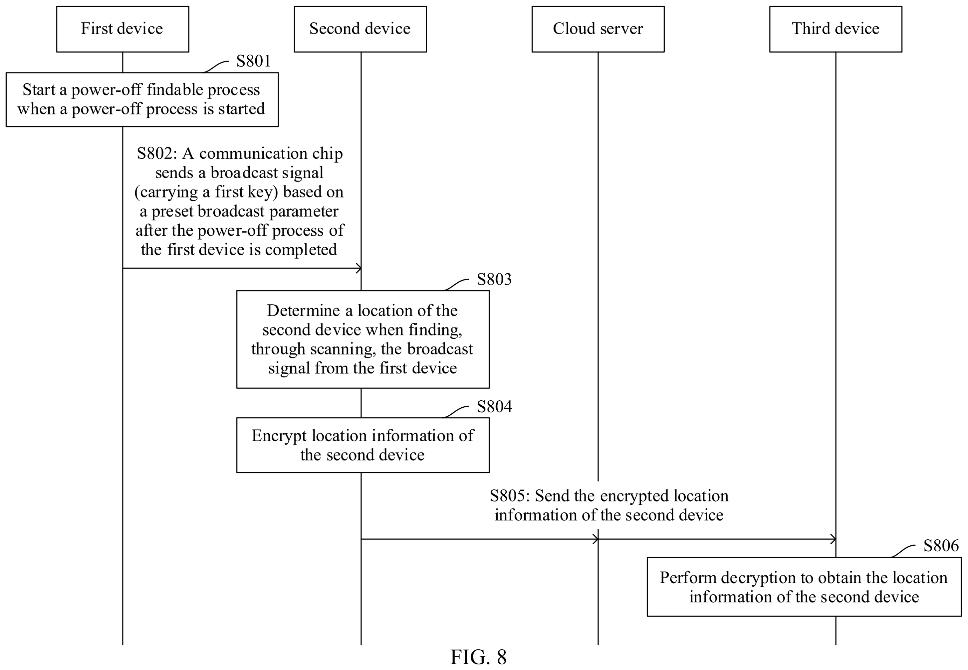

In some embodiments, based on a diagram of the architecture shown in FIG. 5 and an example in which a second device sends a location (namely, a location of the first device) to a cloud server, FIG. 8 shows a flowchart of another method for obtaining device location information according to an embodiment of this application. As shown in FIG. 8, the method for obtaining device location information provided in this embodiment of this application may be implemented by using S801 to S806.

S801: The first device starts a power-off findable process when a power-off process is started.

S802: A communication chip of the first device sends a broadcast signal based on a first broadcast parameter after the power-off process of the first device is completed, where the broadcast signal carries a first key.

S803: The second device determines a location of the second device when finding, through scanning, the broadcast signal from the first device.

The second device may determine the location of the second device by using any method such as positioning by a positioning system or positioning by a sensor. This is not specifically limited in embodiments of this application. For details, refer to a conventional technology.

S804: The second device encrypts location information of the second device.

S805: The second device sends the encrypted location information of the second device to a third device by using the cloud server.

S806: The third device performs decryption to obtain the location information of the second device.

For specific descriptions of S801 to S806 shown in FIG. 8, refer to the foregoing descriptions of S601 to S606. Details are not described herein again.

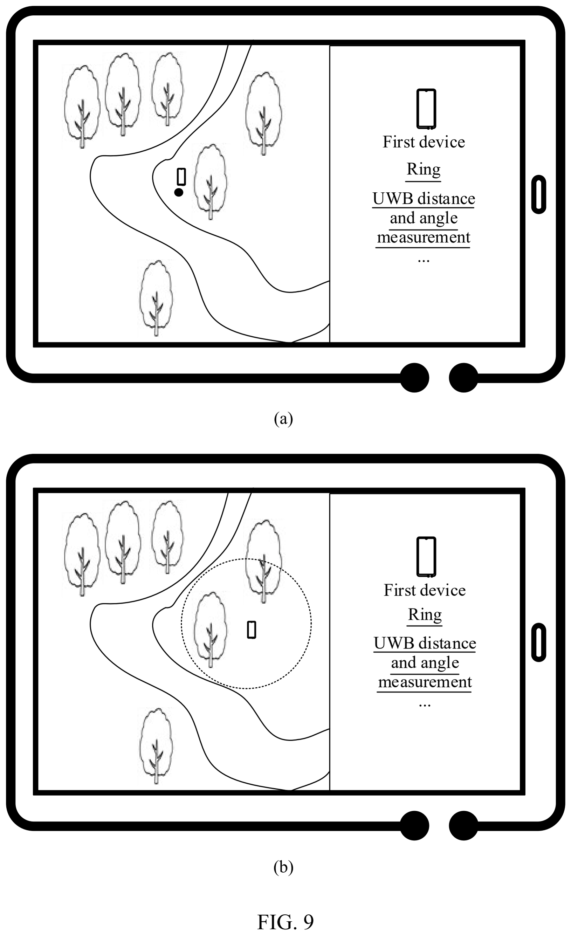

It may be understood that, if the third device obtains the location information of the second device, because a device that can find the broadcast signal from the first device through scanning is usually within a preset range of the first device, the third device may learn of an approximate range of the first device. This can also help the user narrow a range of searching for the first device. If the third device obtains location information of the first device, the third device may precisely learn of a specific location of the first device. For example, after the third device obtains the location information of the first device or the location information of the second device, the corresponding location information may be further displayed on a power-off findable function interface of the third device. For example, if the third device obtains the location information of the first device, a specific location point of the first device on a map may be displayed on the power-off findable function interface of the third device (as shown in (a) in FIG. 9); or if the third device obtains the location information of the second device, a location range of the first device on the map may be displayed on the power-off findable function interface of the third device (as shown in (b) in FIG. 9).

In some embodiments, to help the user find the lost first device more quickly, the first device may further support supplying power to an audio amplifier (for example, a smart PA) after the first device is powered off, so that the audio amplifier can play a ringtone at a preset high volume, thereby facilitating the user to find the first device. The ringtone may be a sound waveform preset in the first device, for example, a default sound waveform or a sound waveform specified by the user. This is not specifically limited in embodiments of this application.

In some examples, when the user performs an operation of enabling a ring button (a ring button shown in (a) in FIG. 9 and (b) in FIG. 9) on the power-off findable function interface, the third device may send a signal to the first device through Bluetooth, to indicate the first device to ring. Correspondingly, after receiving the indication, the first device supplies power to the audio amplifier, so that the first device can play the ringtone at the preset high volume. For example, in a process in which the user approaches the first device based on location information shown in (a) in FIG. 9 or (b) in FIG. 9, when the user is in close proximity to the first device, to quickly find the first device, the user may tap the ring button to trigger ringing of the first device.

In some examples, the first device may automatically trigger, after the device is powered off, to supply power to the audio amplifier, so that the first device can play the ringtone at the preset high volume. For example, after the user enables a function of ringing after loss, the first device may automatically trigger supplying power to the audio amplifier after the device is powered off.

In some embodiments, to help the user find the lost first device more quickly, the first device may further support supplying power to a distance and angle measurement chip (for example, a UWB chip) after the first device is powered off. In this way, the first device can send and receive a UWB signal, so that another device (for example, the second device or the third device) can precisely obtain a location of the first device.

In some examples, when the user performs an operation of enabling a UWB distance and angle measurement button (as shown in (a) in FIG. 9 and (b) in FIG. 9) on the power-off findable function interface, the third device may send a signal to the first device through Bluetooth, to indicate the first device to perform UWB distance and angle measurement. Correspondingly, after receiving the indication, the first device supplies power to the UWB chip, so that the first device can send and receive the UWB signal. For example, in a process in which the user approaches the first device based on location information shown in (a) in FIG. 9 or (b) in FIG. 9, when the user is in close proximity to the first device, to quickly find the first device, the user may tap the UWB distance and angle measurement button to trigger UWB distance and angle measurement on the first device.

In some examples, the first device may automatically trigger, after the device is powered off, to supply power to the UWB chip, so that the first device can cooperate with another device (for example, the second device or the third device) to precisely locate the first device.

Certainly, in embodiments of this application, a specific occasion and a specific time at which the first device triggers ringing or UWB distance and angle measurement are not limited, and may be determined based on a specific device status and a usage scenario.

That the first device supplies power to the audio amplifier or the UWB chip after the device is powered off may include but is not limited to an implementation of supplying power to the audio amplifier or the UWB chip by using a power management module or a power conversion module. A specific implementation process is described in detail below with reference to a specific embodiment.

The following specifically describes, with reference to Embodiment 1 and Embodiment 2, a method for obtaining device location information provided in embodiments of this application.

### Embodiment 1

In Embodiment 1, after a lost first device is powered off, the first device may continue to supply power to a communication chip by using a power management module, so that the communication chip may send a broadcast signal based on a preset broadcast parameter (for example, a first broadcast parameter), to help a user locate the first device by using a "Good Samaritan" solution, thereby helping the user successfully find the first device.

The power management module of the first device includes a control logic unit or a control logic module, configured to: manage and execute power-off findable control logic. After the first device is powered off, the power management module of the first device may control, based on the power-off findable control logic, a communication enable pin to be in an enabled state, so that the communication chip can work normally.

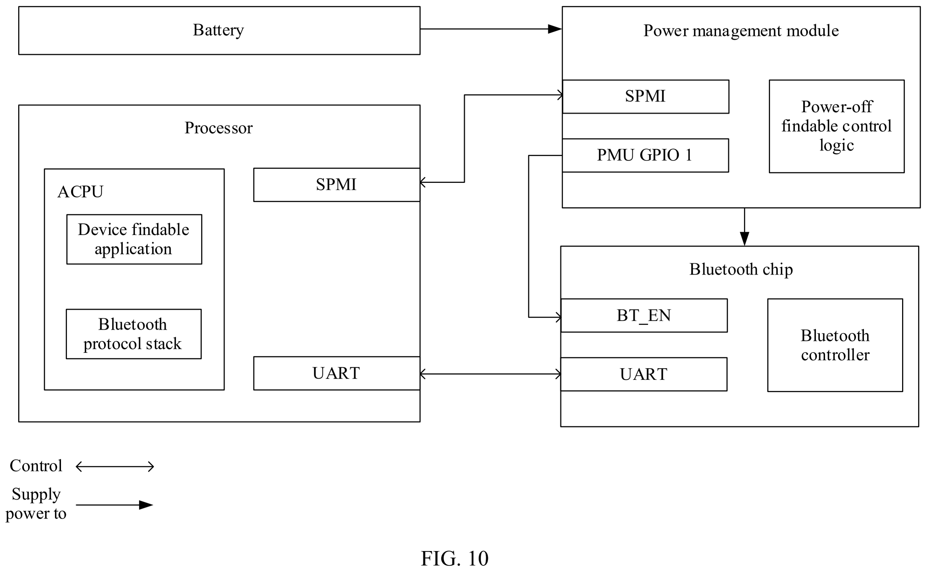

For example, the communication chip is a Bluetooth chip. FIG. 10 shows a diagram of an enabling architecture of the first device according to this embodiment of this application. As shown in FIG. 10, the first device may include a battery, a processor, the power management module, and the Bluetooth chip.

The processor includes an ACPU, and the ACPU includes a device findable application and a Bluetooth protocol stack. The processor further includes a system power management interface (system power management interface, SPMI) and a universal asynchronous receiver/transmitter (universal asynchronous receiver/transmitter, UART). The SPMI is configured to: send and receive information to and from the power management module. For example, when a power-off findable function is enabled, the SPMI sends a first signal (for example, a power-off findable indication) to the power management module, so that the power management module can start the power-off findable control logic. The UART is configured to transmit related data with the Bluetooth chip, for example, send a broadcast parameter, a rotation key, and the like.

The power management module includes an SPMI and a PMU general-purpose input/output (general-purpose input/output, such as GPIO) interface 1 (briefly referred to as a PMU GPIO 1 below). The SPMI is configured to: send and receive information to and from the processor, for example, receive the first signal (for example, the power-off findable indication) from the processor. The power management module is further provided with the power-off findable control logic (for example, set in the control logic unit or the control logic module), used to control, by using the PMU GPIO 1, a Bluetooth enable pin (for example, BT_EN) of the Bluetooth chip to be in an enabled state. When BT_EN is in the enabled state, the Bluetooth chip may work normally by using electric energy from the power management module, for example, send a Bluetooth broadcast.

The Bluetooth chip includes a Bluetooth controller (for example, a BT/BLE controller), configured to perform Bluetooth broadcasting, Bluetooth scanning, Bluetooth connection establishment, and other related processes. The Bluetooth chip further includes the Bluetooth enable pin (for example, BT_EN) and a communication interface (for example, UART). BT_EN is used to enable the Bluetooth chip to be in an enabled state or a power-off state through switching between a high level and a low level. For example, BT_EN may be further switched to a high level based on a high level signal from the PMU GPIO 1 of the power management module, so that the Bluetooth chip is in the enabled state, to support the Bluetooth chip in working normally based on the electric energy obtained from the power management module, for example, sending the Bluetooth broadcast.

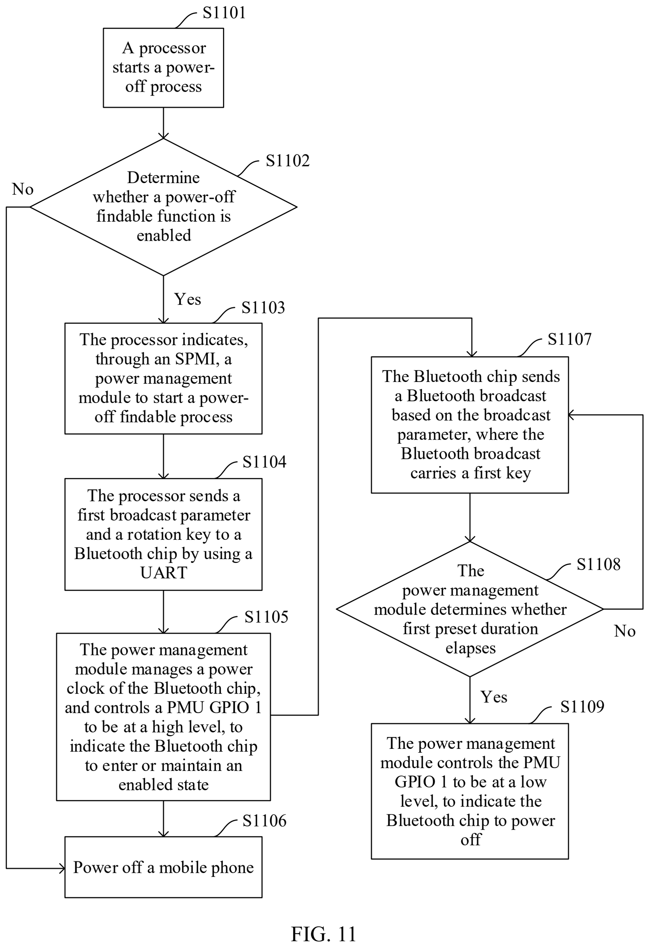

The enabling architecture shown in FIG. 10 is used as an example. Based on an example in which the first device is a lost mobile phone, FIG. 11 shows a diagram of an enabling process of the first device according to this embodiment of this application. As shown in FIG. 11, an enabling process of the mobile phone may include S1101 to S1109.

S1101: The processor starts a power-off process.

The power-off process may be manually triggered (for example, by manually tapping a power-off button), or may be triggered by a low battery level or a preset condition (for example, a scheduled power-off condition). This is not specifically limited in embodiments of this application.

S1102: The processor determines whether the power-off findable function is enabled; and if the function is enabled, S1103 to S1109 are performed; or if the function is not enabled, S1106 is directly performed.

The power-off findable function may be manually enabled by the user, or may be enabled by default by the mobile phone. This is not specifically limited in embodiments of this application.

S1103: The processor indicates, through the SPMI, the power management module to start a power-off findable process.

For example, the processor may send the first signal to the power management module through the SPMI, to indicate the power management module to start the power-off findable process.

S1104: The processor sends the first broadcast parameter and the rotation key to the Bluetooth chip by using the UART.

The first broadcast parameter may include but is not limited to an advertising type, an advertising interval, an advertising window, a scan interval, a scan window, broadcast content, a broadcast content change cycle, and the like. The rotation key includes a rotation policy of a first key, for example, a key rotation cycle.

In some embodiments, after the Bluetooth chip receives the first broadcast parameter and the rotation key from the processor, the Bluetooth chip may alternatively disable the UART, to prevent the Bluetooth chip from mistakenly considering that data from the processor needs to be received after the mobile phone is powered off.

It should be noted that S1103 and S1104 may be simultaneously performed, or S1103 may be performed before S1104, or S1104 may be performed before S1103. This is not limited in embodiments of this application. However, S1104 needs to be performed before S1105, or S1104 needs to be performed before the processor is powered off.

S1105: The power management module manages a power clock of the Bluetooth chip, and controls the PMU GPIO 1 to be at a high level, to indicate the Bluetooth chip to enter or maintain the enabled state.

The power management module manages the power clock of the Bluetooth chip to manage Bluetooth enabling duration. In view of this, the power management module may control the Bluetooth chip to be powered off after the Bluetooth chip continuously sends a broadcast signal for a period of time (for example, first preset duration), to reduce power consumption of the first device.

S1106: Power off the mobile phone.

For example, the power management module may be responsible for a power-off process of the mobile phone. For details, refer to a conventional technology.

S1107: The Bluetooth chip sends a Bluetooth broadcast based on the first broadcast parameter, where the Bluetooth broadcast carries the first key.

It may be understood that, when the PMU GPIO 1 of the power management module is at the high level, BT_EN of the Bluetooth chip connected to the power management module is also switched to a high level. In view of this, the Bluetooth chip enters the enabled state, and the Bluetooth chip in the enabled state may work normally by using the electric energy from the power management module, for example, send the Bluetooth broadcast.

The first key is used to encrypt location information by the second device that finds the Bluetooth broadcast through scanning, to ensure security of the location information of the device.

S1108: The power management module determines whether the first preset duration elapses; and if the first preset duration elapses, the power management module performs S1109; or if the first preset duration does not elapse, the power management module does not perform processing, but the Bluetooth chip continues to perform S1107.

This can reduce power consumption of the first device.

S1109: The power management module controls the PMU GPIO 1 to be at a low level, to indicate the Bluetooth chip to power off.

When the PMU GPIO 1 of the power management module is at the low level, BT_EN of the Bluetooth chip connected to the power management module is also switched to a low level. In view of this, the power management module may indicate the Bluetooth chip to power off.

It may be understood that, based on the device enabling process shown in FIG. 11, software (for example, pin control logic) of the power management module is improved to supply power to and enable a communication chip of a powered-off terminal device based on existing hardware of the first device at extremely low costs, resulting in a simple and time-efficient improvement process. This solution has low costs and the simple and time-efficient improvement process, and therefore does not affect a production cycle of the terminal device, compared with the solution of adding an AOP shown in FIG. 1.

In some embodiments, to help the user find the lost first device more quickly, the first device may further support supplying power to and enabling a distance and angle measurement chip (for example, a UWB chip) after the first device is powered off. In this way, the first device can send and receive a UWB signal, so that another device (for example, the second device or a third device) can precisely obtain a location of the first device.

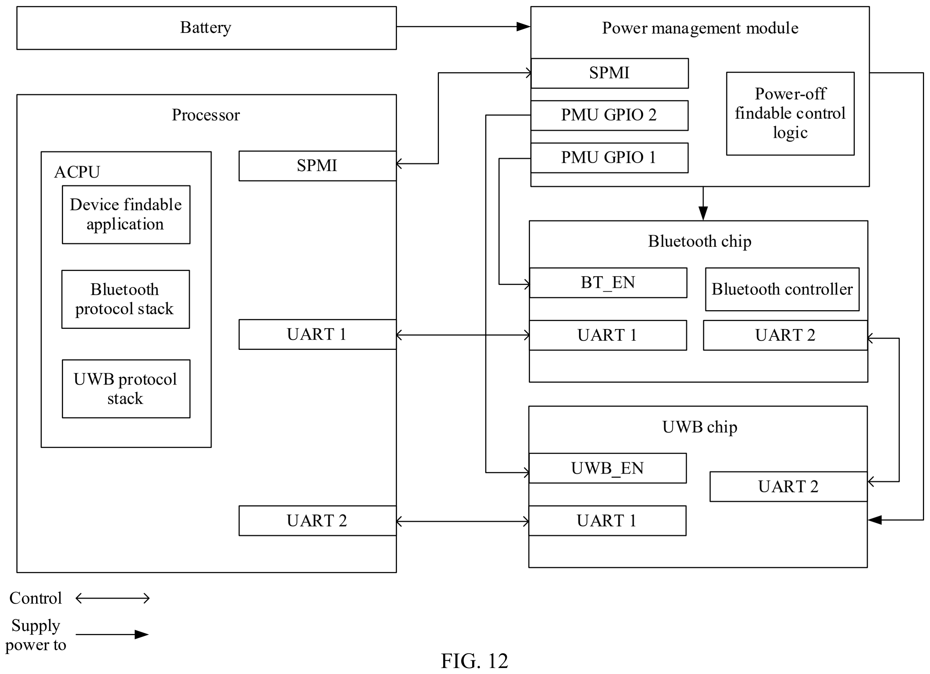

For example, the distance and angle measurement chip is a UWB chip. FIG. 12 shows a diagram of another enabling architecture of the first device according to this embodiment of this application. As shown in FIG. 12, the first device may include a battery, a processor, the power management module, a Bluetooth chip, and the UWB chip.

The processor includes an ACPU, and the ACPU includes a device findable application, a Bluetooth protocol stack, and a UWB protocol stack. The processor further includes an SPMI, a UART 1, and a UART 2. The SPMI is configured to: send and receive information to and from the power management module. For example, when a power-off findable function is enabled, the SPMI sends a first signal (for example, a power-off findable indication) to the power management module, so that the power management module can start the power-off findable control logic. The UART 1 is configured to transmit related data with the Bluetooth chip, for example, send the first broadcast parameter, a rotation key, and the like. The UART 2 is configured to transmit distance and angle measurement-related data with the UWB chip, for example, send a first distance and angle measurement parameter.

The power management module includes an SPMI, a PMU GPIO 1, and a PMU GPIO 2. The power management module is further provided with the power-off findable control logic (for example, set in the control logic unit or the control logic module), used to control, by using the PMU GPIO 1, a Bluetooth enable pin (for example, BT_EN) of the Bluetooth chip to be in an enabled state, and control, by using the PMU GPIO 2, a UWB enable pin (for example, UWB_EN) of the UWB chip to be in an enabled state. When BT_EN is in the enabled state, the Bluetooth chip may work normally by using electric energy from the power management module, for example, send a Bluetooth broadcast. When UWB_EN is in the enabled state, the UWB chip may work normally by using the electric energy from the power management module, for example, send a UWB signal.

The Bluetooth chip includes a Bluetooth controller (for example, a BT/BLE controller), the Bluetooth enable pin (for example, BT_EN), a UART 1, and a UART 2. BT_EN is used to enable the Bluetooth chip to be in an enabled state or a power-off state through switching between a high level and a low level. The UART 1 is configured to transmit related data with the processor, for example, receive the first broadcast parameter, the rotation key, and the like. The UART 2 is configured to indicate the UWB chip to start a UWB distance and angle measurement process. For example, the UART 2 may indicate, by maintaining a high level, the UWB chip to start the UWB distance and angle measurement process.

The UWB chip includes the UWB enable pin (for example, UWB_EN), a UART 1, and a UART 2. UWB_EN is used to enable the UWB chip to be in an enabled state or a power-off state through switching between a high level and a low level. The UART 1 is configured to transmit related data with the processor, for example, receive the first distance and angle measurement parameter. The UART 2 is used to start the UWB distance and angle measurement process as indicated by the Bluetooth chip.

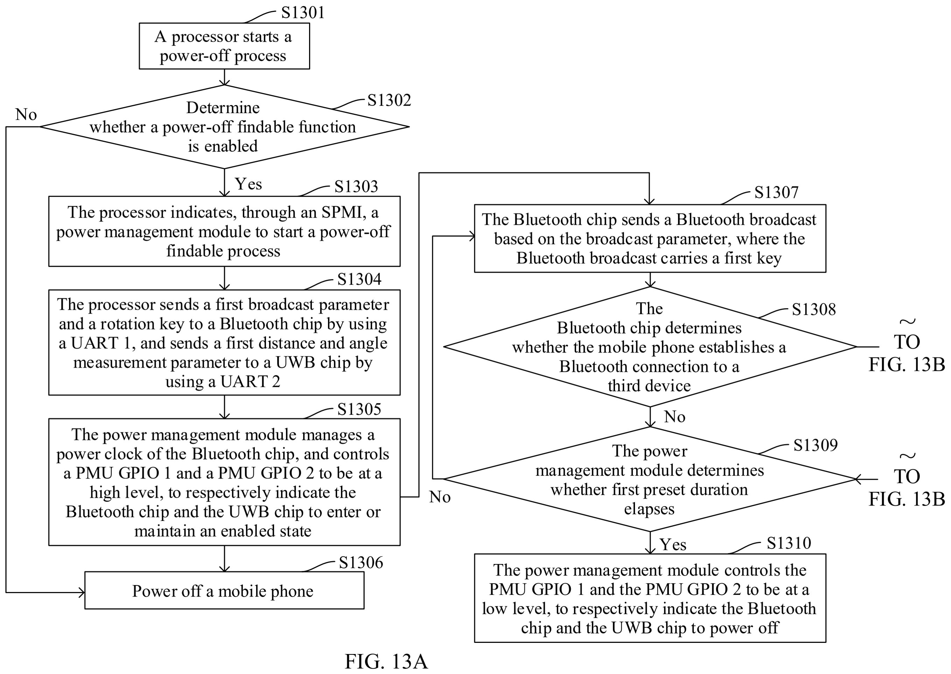

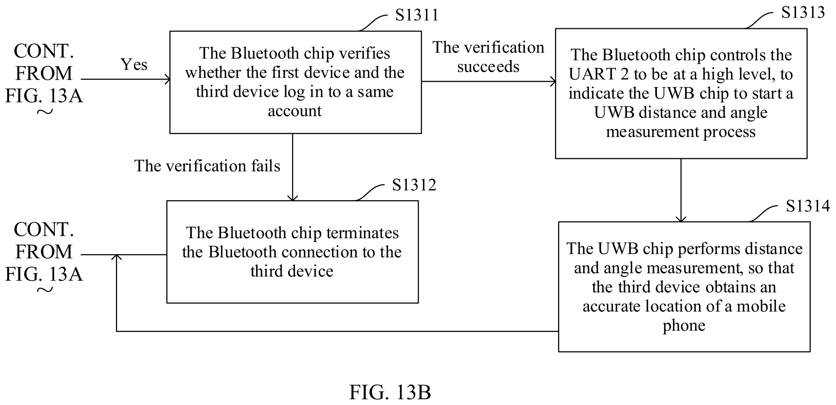

The enabling architecture shown in FIG. 12 is used as an example. Based on an example in which the first device is a lost mobile phone, FIG. 13A and FIG. 13B are a diagram of another enabling process of the first device according to this embodiment of this application. As shown in FIG. 13A and FIG. 13B, an enabling process of the mobile phone may include S1301 to S1314.

S1301: The processor starts a power-off process.

S1302: The processor determines whether the power-off findable function is enabled; and if the function is enabled, S1303 to S1314 are performed; or if the function is not enabled, S1306 is directly performed.

S1303: The processor indicates, through the SPMI, the power management module to start a power-off findable process.

For example, the processor may send the first signal to the power management module through the SPMI, to indicate the power management module to start the power-off findable process.

S1304: The processor sends the first broadcast parameter and the rotation key to the Bluetooth chip by using the UART 1, and sends the first distance and angle measurement parameter to the UWB chip by using the UART 2.

The first distance and angle measurement parameter may include but is not limited to a distance and angle measurement manner, a signal transmission cycle, a signal transmission interval, and the like. This is not specifically limited in embodiments of this application. For details, refer to a conventional technology.

In some embodiments, after the Bluetooth chip receives the first broadcast parameter and the rotation key from the processor, the Bluetooth chip may alternatively disable the UART 1, to prevent the Bluetooth chip from mistakenly considering that data from the processor needs to be received after the mobile phone is powered off. Similarly, after the UWB chip receives the first distance and angle measurement parameter from the processor, the UWB chip may also disable the UART 2, to prevent the UWB chip from mistakenly considering that data from the processor needs to be received after the mobile phone is powered off.

It should be noted that S1303 and S1304 may be simultaneously performed, or S1303 may be performed before S1304, or S1304 may be performed before S1303. This is not limited in embodiments of this application. However, S1304 needs to be performed before S1305, or S1304 needs to be performed before the processor is powered off.

S1305: The power management module manages a power clock of the Bluetooth chip, and controls the PMU GPIO 1 and the PMU GPIO 2 to be at a high level, to respectively indicate the Bluetooth chip and the UWB chip to enter or maintain the enabled state.

S1306: Power off the mobile phone.

S1307: The Bluetooth chip sends a Bluetooth broadcast based on the first broadcast parameter, where the Bluetooth broadcast carries a first key.

S1308: The Bluetooth chip determines whether the mobile phone establishes a Bluetooth connection to a third device; and if the mobile phone establishes the Bluetooth connection to the third device, S1311 is performed; or if the mobile phone does not establish the Bluetooth connection to the third device, S1309 is performed.

In view of this, when the third device is in close proximity to the mobile phone, the mobile phone may trigger the UWB chip to be in the enabled state, so that the UWB chip supports a distance and angle measurement process between the mobile phone and the third device by using the electric energy from the power management module. This helps the user more precisely learn of an accurate location of the mobile phone, and help the user find the lost mobile phone more quickly.

S1309: The power management module determines whether first preset duration elapses; and if the first preset duration elapses, the power management module performs S1310; or if the first preset duration does not elapse, the power management module does not perform processing, but the Bluetooth chip continues to perform S1307.

S1310: The power management module controls the PMU GPIO 1 and the PMU GPIO 2 to be at a low level, to respectively indicate the Bluetooth chip and the UWB chip to power off.

The PMU GPIO 1 and the PMU GPIO 2 of the power management module are at the low level, and BT_EN of the Bluetooth chip and UWB_EN of the UWB chip that are respectively connected to the PMU GPIO 1 and the PMU GPIO 2 are also switched to a low level to power off.

S1311: The Bluetooth chip verifies whether the first device and the third device log in to a same account; and if the verification fails, S1309 and S1310 are performed after S1312; or if the verification succeeds, S1309 and S1310 are performed after S1313 and S1314.

S1312: The Bluetooth chip terminates the Bluetooth connection to the third device.

In view of this, when the mobile phone and the third device do not log in to the same account, the mobile phone may terminate the Bluetooth connection to the third device, so that security of the location information of the first device is ensured, and a battery level of the mobile phone is saved to a maximum extent.

S1313: The Bluetooth chip controls the UART 2 to be at the high level, to indicate the UWB chip to start the UWB distance and angle measurement process.

For example, when receiving a UWB distance and angle measurement instruction sent by the third device, the Bluetooth chip may control the UART 2 to be at the high level, to indicate the UWB chip to start the UWB distance and angle measurement process.

S1314: The UWB chip performs distance and angle measurement, so that the third device obtains an accurate location of the mobile phone.

For example, the UWB chip may perform distance and angle measurement based on but not limited to one or more of the following methods: a time difference of arrival (time difference of arrival, TDOA) positioning method, a time of arrival (time of arrival, TOA) positioning method, an angle of arrival (angle of arrival, AOA) positioning method, and the like. This is not specifically limited in embodiments of this application. Refer to a conventional technology.

In some embodiments, the third device may be mainly responsible for distance and angle measurement, and the mobile phone may cooperate with the third device to complete a distance and angle measurement-related task. In some other embodiments, the mobile phone may be mainly responsible for distance and angle measurement, and the third device may cooperate with the third device to complete a distance and angle measurement-related task. In embodiments of this application, a main responsible party for distance and angle measurement is not limited, and is determined based on a specific situation. For example, when the third device does not have a distance and angle measurement-related calculation capability, the mobile phone may be mainly responsible for distance and angle measurement. For a detailed method and a specific process of distance and angle measurement (for example, UWB distance and angle measurement), refer to a conventional technology. Details are not described herein again.

It may be understood that, based on the device enabling process shown in FIG. 13A and FIG. 13B, software (for example, pin control logic) of the power management module is improved to supply power to and enable a communication chip and a distance and angle measurement chip of a powered-off terminal device based on existing hardware of the first device at extremely low costs, resulting in a simple and time-efficient improvement process. This solution has low costs and the simple and time-efficient improvement process, and therefore does not affect a production cycle of the terminal device, compared with the solution of adding an AOP shown in FIG. 1. In addition, the lost first device can be located more precisely through distance and angle measurement, to help the user find the first device more quickly.

In some embodiments, to help the user find the lost first device more quickly, the first device may further support supplying power to and enabling an audio amplifier (for example, a smart PA) after the first device is powered off, so that the audio amplifier can play a ringtone at a preset high volume, thereby facilitating the user to successfully find the first device.

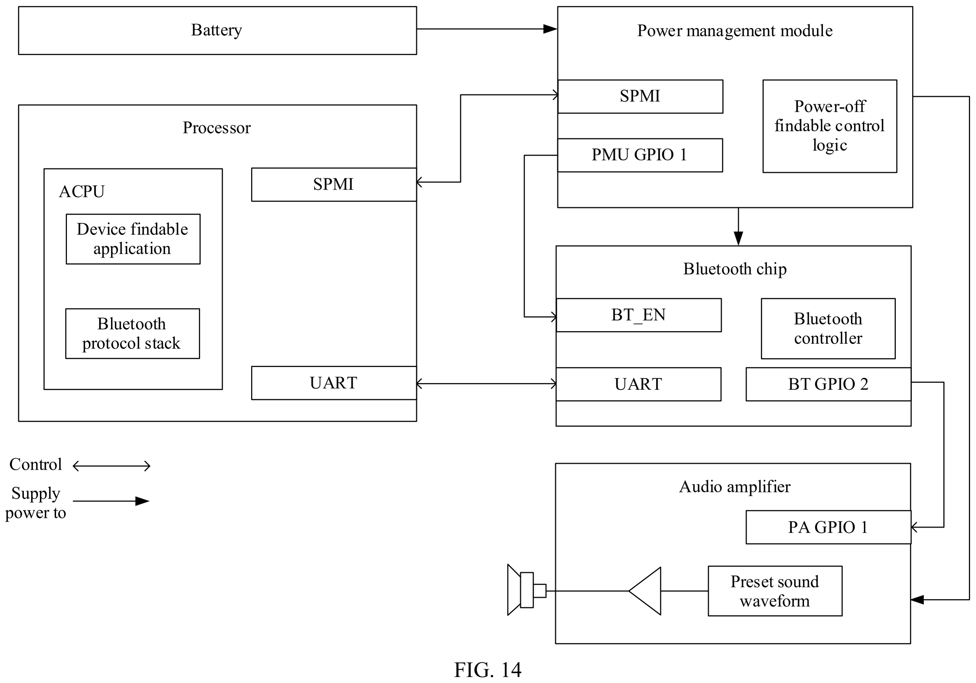

FIG. 14 shows a diagram of another enabling architecture of the first device according to this embodiment of this application. As shown in FIG. 14, the first device may include a battery, a processor, the power management module, a Bluetooth chip, and the audio amplifier.

The processor includes an ACPU, and the ACPU includes a device findable application and a Bluetooth protocol stack. The processor further includes an SPMI and a UART. The power management module includes an SPMI and a PMU GPIO 1. The Bluetooth chip includes a Bluetooth controller (for example, a BT/BLE controller), a Bluetooth enable pin (for example, BT_EN), and a UART. For specific descriptions of the foregoing modules in the processor, the power management module, and the Bluetooth chip, refer to the descriptions of FIG. 10 in the foregoing embodiment. Details are not described herein again.

As shown in FIG. 14, the Bluetooth chip further includes a Bluetooth general-purpose input/output interface, for example, a BT GPIO 2, used to indicate, by maintaining a high level, the audio amplifier to ring, or indicate, by maintaining a low level, the audio amplifier to stop ringing.

The audio amplifier includes an audio amplifier general-purpose input/output interface, for example, a PA GPIO 1, used to trigger ringing or stop ringing as indicated by the Bluetooth chip. The audio amplifier further includes a power amplifier, configured to amplify power of a sound waveform. As shown in FIG. 14, after amplifying power of a preset sound waveform in the audio amplifier to preset power, the audio amplifier may play a ringtone at a high volume by using an external speaker, so that the user can successfully find the first device.

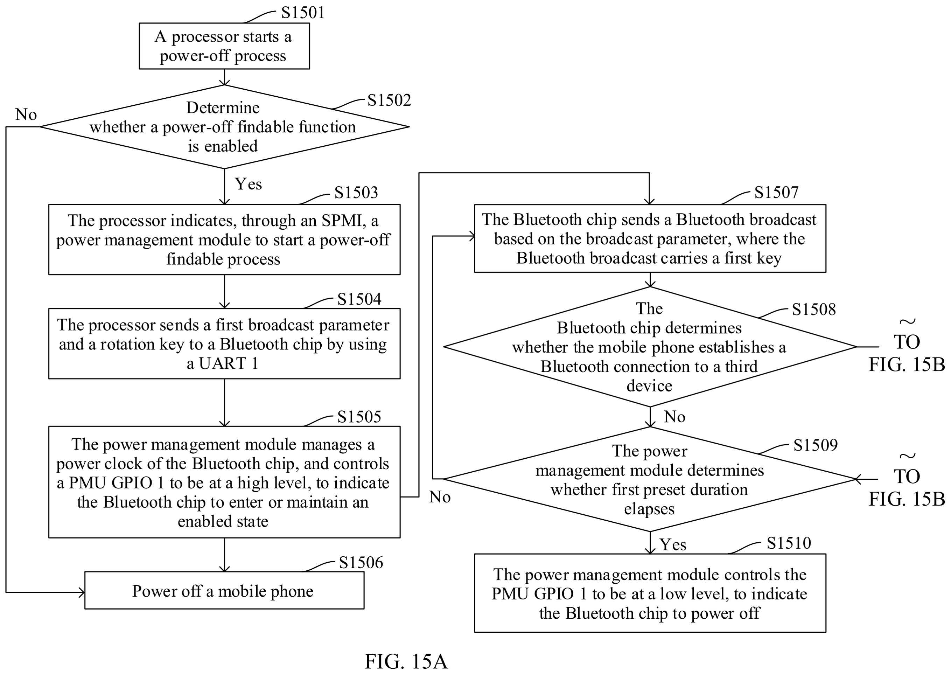

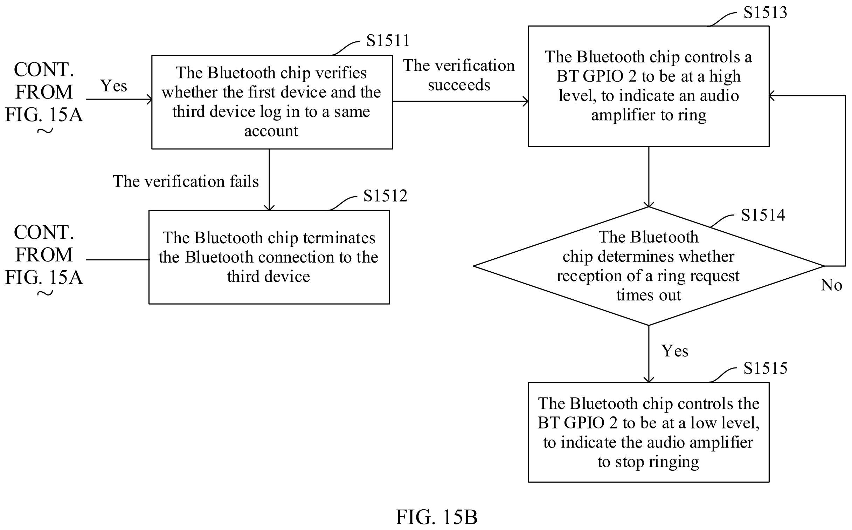

The enabling architecture shown in FIG. 14 is used as an example. Based on an example in which the first device is a lost mobile phone, FIG. 15A and FIG. 15B are a diagram of another enabling process of the first device according to this embodiment of this application. As shown in FIG. 15A and FIG. 15B, an enabling process of the mobile phone may include S1501 to S1515.

S1501: The processor starts a power-off process.

S1502: The processor determines whether a power-off findable function is enabled; and if the function is enabled, S1503 to S1515 are performed; or if the function is not enabled, S1506 is directly performed.

S1503: The processor indicates, through the SPMI, the power management module to start a power-off findable process.

For example, the processor may send a first signal to the power management module through the SPMI, to indicate the power management module to start the power-off findable process.

S1504: The processor sends the first broadcast parameter and a rotation key to the Bluetooth chip by using the UART.

In some embodiments, after the Bluetooth chip receives the first broadcast parameter and the rotation key from the processor, the Bluetooth chip may alternatively disable the UART, to prevent the Bluetooth chip from mistakenly considering that data from the processor needs to be received after the mobile phone is powered off.

It should be noted that S1503 and S1504 may be simultaneously performed, or S1503 may be performed before S1504, or S1504 may be performed before S1503. This is not limited in embodiments of this application. However, S1504 needs to be performed before S1505, or S1504 needs to be performed before the processor is powered off.

S1505: The power management module manages a power clock of the Bluetooth chip, and controls the PMU GPIO 1 to be at a high level, to indicate the Bluetooth chip to enter or maintain an enabled state.

S1506: Power off the mobile phone.

S1507: The Bluetooth chip sends a Bluetooth broadcast based on the first broadcast parameter, where the Bluetooth broadcast carries a first key.

S1508: The Bluetooth chip determines whether the mobile phone establishes a Bluetooth connection to a third device; and if the mobile phone establishes the Bluetooth connection to the third device, S1511 to S1515 are performed; or if the mobile phone does not establish the Bluetooth connection to the third device, S1509 and S1510 are performed.

In view of this, when the third device is in close proximity to the mobile phone, the mobile phone may trigger playing of a ringtone, to help the user more precisely learn of an accurate location of the mobile phone, and help the user more quickly find the lost first device.

S1509: The power management module determines whether first preset duration elapses; and if the first preset duration elapses, the power management module performs S1510; or if the first preset duration does not elapse, the power management module does not perform processing, but the Bluetooth chip continues to perform S1507.

S1510: The power management module controls the PMU GPIO 1 to be at a low level, to indicate the Bluetooth chip to power off.

S1511: The Bluetooth chip verifies whether the first device and the third device log in to a same account; and if the verification fails, S1509 and S1510 are performed after S1512; or if the verification succeeds, S1513 to S1515 are performed.

S1512: The Bluetooth chip terminates the Bluetooth connection to the third device.

In view of this, when the mobile phone and the third device do not log in to the same account, the mobile phone may terminate the Bluetooth connection to the third device, so that security of the first device is ensured, and a battery level of the mobile phone is saved to a maximum extent.

S1513: The Bluetooth chip controls the BT GPIO 2 to be at the high level, to indicate the audio amplifier to ring.

For example, when receiving a ring instruction sent by the third device, the Bluetooth chip may control the BT GPIO 2 to be at the high level, to indicate the audio amplifier to ring.

S1514: The Bluetooth chip determines whether reception of a ring request times out; and if the reception does not time out, S1513 is performed; or if the reception times out, S1515 is performed.

This can avoid excessive battery level consumption caused by continuous ringing of the mobile phone, and avoid noise caused by continuous ringing of the mobile phone to an environment.

S1515: The Bluetooth chip controls the BT GPIO 2 to be at the low level, to indicate the audio amplifier to stop ringing.

It may be understood that, based on the device enabling process shown in FIG. 15A and FIG. 15B, software (for example, pin control logic) of the power management module is improved to supply power to and enable a communication chip and an audio amplifier of a powered-off terminal device based on existing hardware of the first device at extremely low costs, resulting in a simple and time-efficient improvement process. This solution has low costs and the simple and time-efficient improvement process, and therefore does not affect a production cycle of the terminal device, compared with the solution of adding an AOP shown in FIG. 1. In addition, supplying power to and enabling the audio amplifier may support the lost first device in playing the ringtone at the preset high volume, to help the user find the first device more quickly.

### Embodiment 2

In Embodiment 2, after a lost first device is powered off, a power conversion module of the first device obtains a battery level from a battery of the first device, converts a voltage of the first device into a voltage that adapts to a communication chip, and continues to supply power to the communication chip, so that the communication chip may send a broadcast signal based on a preset broadcast parameter (for example, a first broadcast parameter), to help a user locate the first device by using a "Good Samaritan" solution, thereby helping the user successfully find the first device.

The communication chip includes a GPIO interface, and the GPIO interface supports maintaining the GPIO interface in an enabled state, so that the communication chip can work normally by using electric energy from the power conversion module, for example, send the broadcast signal. The power conversion module may be an existing hardware module (for example, a hardware module in a power management module) of the first device, or may be a newly added hardware module. This is not limited in embodiments of this application.

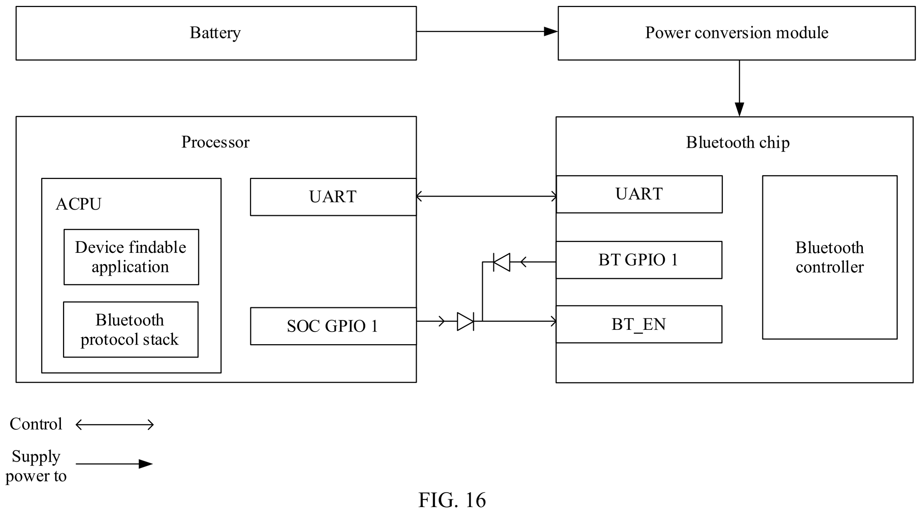

For example, the communication chip is a Bluetooth chip. FIG. 16 shows a diagram of another enabling architecture of the first device according to this embodiment of this application. As shown in FIG. 16, the first device may include the battery, a processor, the power conversion module, and the Bluetooth chip.

The processor includes an ACPU, and the ACPU includes a device findable application and a Bluetooth protocol stack. The processor further includes a UART. The power conversion module is, for example, an LDO. The Bluetooth chip includes a Bluetooth controller (for example, a BT/BLE controller), a Bluetooth enable pin (for example, BT_EN), and a UART. For specific descriptions of the foregoing modules in the processor, the power management module, and the Bluetooth chip, refer to the descriptions of FIG. 10, FIG. 12, and FIG. 14 in the foregoing embodiments. Details are not described herein again.

As shown in FIG. 16, the processor further includes a processor general-purpose input/output interface, for example, a SOC GPIO 1, used to indicate, by being at a high level, the Bluetooth chip to enter or maintain an enabled state. The Bluetooth chip further includes a Bluetooth general-purpose input/output interface, for example, a BT GPIO 1, used to maintain a high level, so that the Bluetooth chip maintains the enabled state after the first device is powered off.

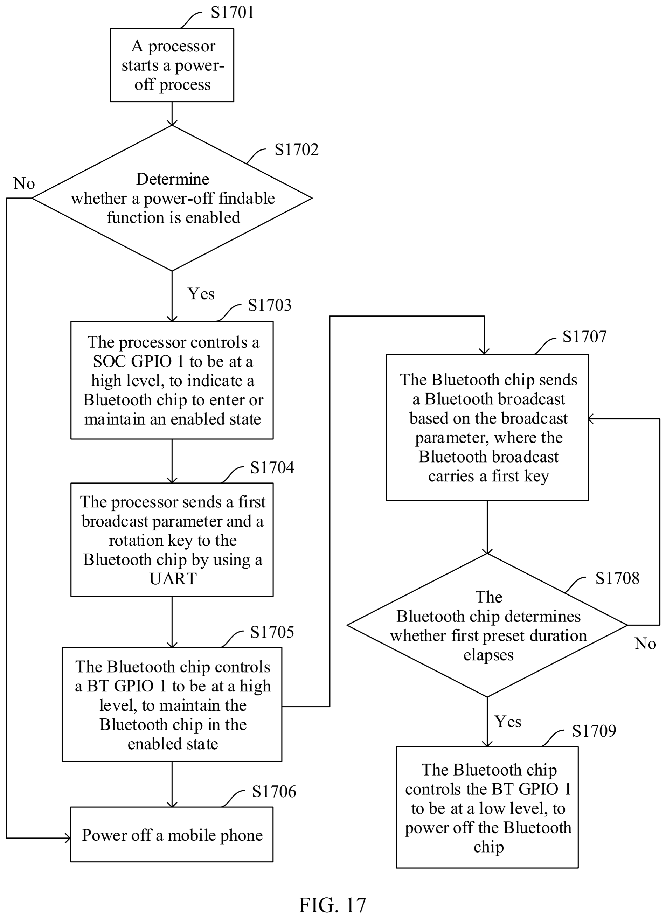

The enabling architecture shown in FIG. 16 is used as an example. Based on an example in which the first device is a lost mobile phone, FIG. 17 is a diagram of another enabling process of the first device according to this embodiment of this application. As shown in FIG. 17, an enabling process of the mobile phone may include S1701 to S1709.

S1701: The processor starts a power-off process.

The power-off process may be manually triggered (for example, by manually tapping a power-off button), or may be triggered by a low battery level or a preset condition (for example, a scheduled power-off condition). This is not specifically limited in embodiments of this application.

S1702: The processor determines whether a power-off findable function is enabled; and if the function is enabled, S1703 to S1709 are performed; or if the function is not enabled, S1706 is directly performed.

The power-off findable function may be manually enabled by the user, or may be enabled by default by the mobile phone. This is not specifically limited in embodiments of this application.

S1703: The processor controls the SOC GPIO 1 to be at the high level, to indicate the Bluetooth chip to enter or maintain the enabled state.

It may be understood that, when the SOC GPIO 1 of the processor is at the high level, BT_EN of the Bluetooth chip connected to the SOC GPIO 1 is also switched to a high level. In this way, the Bluetooth chip may enter the enabled state. After entering the enabled state, the Bluetooth chip may work normally by using the electric energy from the power conversion module, for example, start the power-off findable process.

It should be noted that, in the enabling process shown in FIG. 17, only an example is used in which the Bluetooth chip is not initially in the enabled state and the processor indicates, by controlling the SOC GPIO 1 to be at the high level, the Bluetooth chip to enter the enabled state. In some embodiments, for example, when the Bluetooth chip is initially in the enabled state, S 1703 shown in FIG. 17 may alternatively be omitted.

S1704: The processor sends the first broadcast parameter and a rotation key to the Bluetooth chip by using the UART.

The first broadcast parameter may include but is not limited to an advertising type, an advertising interval, an advertising window, a scan interval, a scan window, broadcast content, a broadcast content change cycle, and the like. The rotation key includes a rotation policy of a first key, for example, a key rotation cycle.

In some embodiments, after the Bluetooth chip receives the first broadcast parameter and the rotation key from the processor, the Bluetooth chip may alternatively disable the UART, to prevent the Bluetooth chip from mistakenly considering that data from the processor needs to be received after the mobile phone is powered off.

It should be noted that S1703 and S1704 may be simultaneously performed, or S 1703 may be performed before S 1704, or S 1704 may be performed before S 1703. This is not limited in embodiments of this application. However, S 1704 needs to be performed before S 1705, or S 1704 needs to be performed before the processor is powered off.

S1705: The Bluetooth chip controls the BT GPIO 1 to be at the high level, to maintain the Bluetooth chip in the enabled state.

As shown in FIG. 16, due to a function of a diode, when the BT GPIO 1 is at the high level, BT_EN of the Bluetooth chip is at a high level. In this way, the Bluetooth chip may maintain the enabled state.

S1706: Power off the mobile phone.

S1707: The Bluetooth chip sends a Bluetooth broadcast based on the first broadcast parameter, where the Bluetooth broadcast carries the first key.

The first key is used to encrypt location information by the second device that finds the Bluetooth broadcast through scanning, to ensure security of the location information of the device.

S1708: The Bluetooth chip determines whether first preset duration elapses; and if the first preset duration elapses, the Bluetooth chip performs S1709; or if the first preset duration does not elapse, the Bluetooth chip continues to perform S1707.

For example, the Bluetooth controller may manage a power clock of the Bluetooth chip, and the Bluetooth controller may determine, based on the power clock, whether the first preset duration elapses.

S1709: The Bluetooth chip controls the BT GPIO 1 to be at a low level, to power off the Bluetooth chip.

It may be understood that, based on the device enabling process shown in FIG. 17, a pin connection relationship of the Bluetooth chip is improved, so that the Bluetooth chip manages a working status of the Bluetooth chip, to supply power to and enable a communication chip of a powered-off terminal device based on existing hardware (for example, the power conversion module, the processor, the battery, and the Bluetooth chip) of the first device at extremely low costs, resulting in a simple and time-efficient improvement process. This solution has low costs and the simple and time-efficient improvement process, and therefore does not affect a production cycle of the terminal device, compared with the solution of adding an AOP shown in FIG. 1. Alternatively, even if the power conversion module in the first device is a newly added hardware module, due to a simple function to be implemented by the power conversion module, a simple product structure, and the like, a product is mature and costs are usually extremely low. Therefore, the solution can supply power to and enable a communication chip of a powered-off terminal device at extremely low costs, without affecting a production cycle of the terminal device, compared with the solution of adding an AOP shown in FIG. 1.

In some embodiments, to help the user find the lost first device more quickly, the first device may further support supplying power to and enabling a distance and angle measurement chip (for example, a UWB chip) after the first device is powered off. In this way, the first device can send and receive a UWB signal, so that another device (for example, the second device or a third device) can precisely obtain a location of the first device.

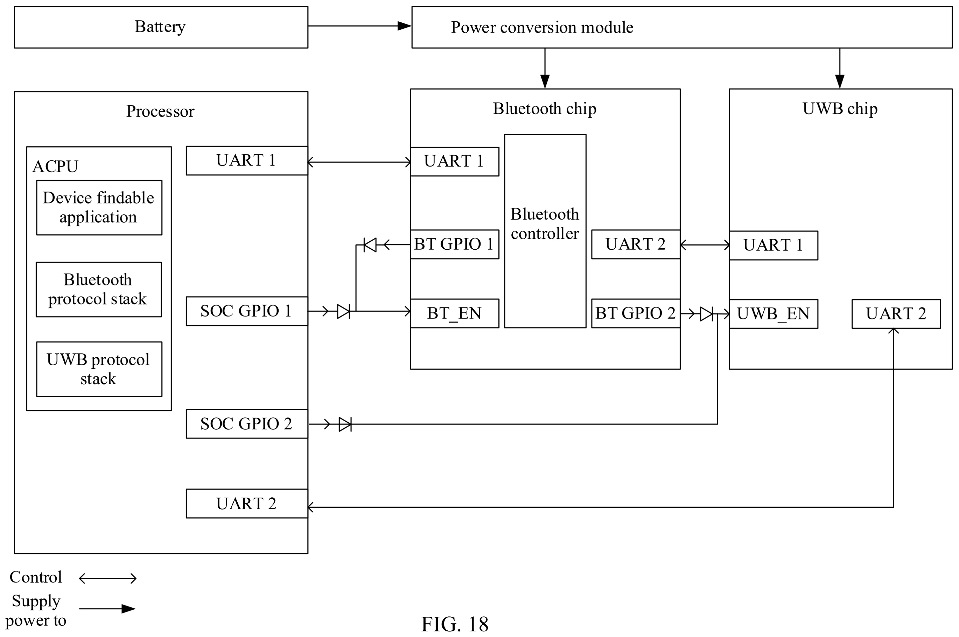

For example, the distance and angle measurement chip is a UWB chip. FIG. 18 shows a diagram of another enabling architecture of the first device according to this embodiment of this application. As shown in FIG. 18, the first device may include a battery, a processor, the power conversion module, a Bluetooth chip, and the UWB chip.

The processor includes an ACPU, and the ACPU includes a device findable application, a Bluetooth protocol stack, a UWB protocol stack, and a SOC GPIO 1. The power conversion module is, for example, an LDO. The Bluetooth chip includes a Bluetooth controller (for example, a BT/BLE controller), a Bluetooth enable pin (for example, BT_EN), and a BT GPIO 1. For specific descriptions of the foregoing modules in the processor, the power management module, and the Bluetooth chip, refer to the descriptions of FIG. 16 in the foregoing embodiment. Details are not described herein again.

As shown in FIG. 18, the processor further includes a UART 1, a UART 2, and a SOC GPIO 2. The UART 1 is configured to transmit related data with the Bluetooth chip, for example, send the first broadcast parameter, a rotation key, and the like. The UART 2 is configured to transmit distance and angle measurement-related data with the UWB chip, for example, send a first distance and angle measurement parameter. The SOC GPIO 2 is configured to control a UWB enable pin (for example, UWB_EN) of the UWB chip, so that the UWB chip is in the enabled state.

The Bluetooth chip further includes a UART 1, a UART 2, and a BT GPIO 2. The UART 1 is configured to transmit related data with the processor, for example, receive the first broadcast parameter, the rotation key, and the like. The UART 2 is configured to indicate the UWB chip to start a UWB distance and angle measurement process. For example, the UART 2 may maintain a high level, to indicate the UWB chip to start the UWB distance and angle measurement process. The BT GPIO 2 is configured to maintain a high level, to maintain the UWB chip still in the enabled state after the first device is powered off.

The UWB chip includes the UWB enable pin (for example, UWB_EN), a UART 1, and a UART 2. UWB_EN is used to enable the UWB chip to be in the enabled state or a power-off state through switching between a high level and a low level. The UART 1 is configured to transmit related data with the processor, for example, receive the first distance and angle measurement parameter. The UART 2 is used to start the UWB distance and angle measurement process as indicated by the Bluetooth chip.

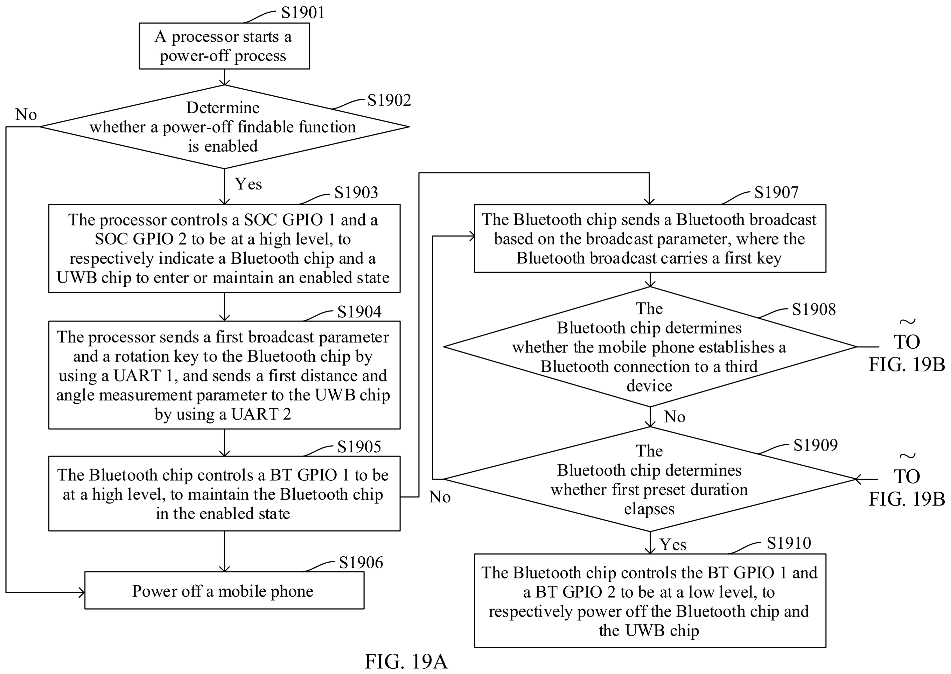

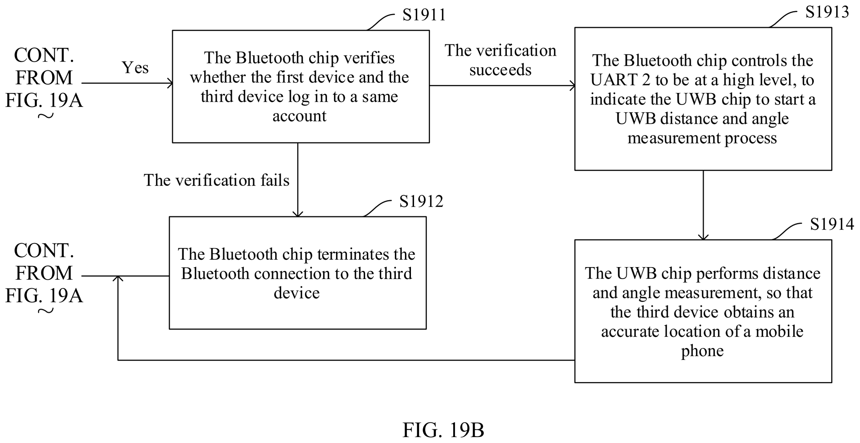

It should be noted that a manner in which the processor shown in FIG. 18 controls, by using the SOC GPIO 2, the UWB enable pin (for example, UWB_EN) of the UWB chip to enable the UWB chip to be in the enabled state is merely an example. In some embodiments, the processor may not include the SOC GPIO 2, and enabling the UWB chip to enter or maintain the enabled state may be mainly controlled by the Bluetooth chip by using the BT GPIO 2. The enabling architecture shown in FIG. 18 is used as an example. Based on an example in which the first device is a lost mobile phone, FIG. 19A and FIG. 19B are a diagram of another enabling process of the first device according to this embodiment of this application. As shown in FIG. 19A and FIG. 19B, an enabling process of the mobile phone may include S1901 to S1914.

S1901: The processor starts a power-off process.

S1902: The processor determines whether a power-off findable function is enabled; and if the function is enabled, S1903 to S1914 are performed; or if the function is not enabled, S1906 is directly performed.

S1903: The processor controls the SOC GPIO 1 and the SOC GPIO 2 to be at the high level, to respectively indicate the Bluetooth chip and the UWB chip to enter or maintain the enabled state.

It should be noted that, in the enabling process shown in FIG. 19A and FIG. 19B, only an example is used in which the Bluetooth chip and the UWB chip are not initially in the enabled state, and the processor controls the SOC GPIO 1 and the SOC GPIO 2 to be at the high level, to respectively indicate the Bluetooth chip and the UWB chip to enter the enabled state. In some embodiments, for example, in a case in which the Bluetooth chip is initially in the enabled state, a process in which the processor controls the SOC GPIO 1 to be at the high level shown in FIG. 19A may be omitted. For another example, in a case in which the UWB chip is initially in the enabled state, a process in which the processor controls the SOC GPIO 2 to be at the high level shown in FIG. 19A may be omitted.

S1904: The processor sends the first broadcast parameter and the rotation key to the Bluetooth chip by using the UART 1, and sends the first distance and angle measurement parameter to the UWB chip by using the UART 2.

The first distance and angle measurement parameter may include but is not limited to a distance and angle measurement manner, a signal transmission cycle, a signal transmission interval, and the like. This is not specifically limited in embodiments of this application. For details, refer to a conventional technology.

In some embodiments, after the Bluetooth chip receives the first broadcast parameter and the rotation key from the processor, the Bluetooth chip may alternatively disable the UART 1, to prevent the Bluetooth chip from mistakenly considering that data from the processor needs to be received after the mobile phone is powered off. Similarly, after the UWB chip receives the first distance and angle measurement parameter from the processor, the UWB chip may also disable the UART 2, to prevent the UWB chip from mistakenly considering that data from the processor needs to be received after the mobile phone is powered off.

It should be noted that S1903 and S1904 may be simultaneously performed, or S1903 may be performed before S1904, or S1904 may be performed before S1903. This is not limited in embodiments of this application. However, S1904 needs to be performed before S1905, or S1904 needs to be performed before the processor is powered off.

S1905: The Bluetooth chip controls the BT GPIO 1 to be at a high level, to maintain the Bluetooth chip in the enabled state.

S1906: Power off the mobile phone.

S1907: The Bluetooth chip sends a Bluetooth broadcast based on the first broadcast parameter, where the Bluetooth broadcast carries the first key.

S1908: The Bluetooth chip determines whether the mobile phone establishes a Bluetooth connection to a third device; and if the mobile phone establishes the Bluetooth connection to the third device, S1911 is performed; or if the mobile phone does not establish the Bluetooth connection to the third device, S1909 is performed.

In view of this, when the third device is in close proximity to the mobile phone, the mobile phone may enable the UWB chip, so that the UWB chip may support a distance and angle measurement process between the mobile phone and the third device by using electric energy from the power conversion module. This helps the user more precisely learn of an accurate location of the mobile phone, and help the user find the lost first device more quickly.

S1909: The Bluetooth chip determines whether first preset duration elapses; and if the first preset duration elapses, the Bluetooth chip performs S1910; or if the first preset duration does not elapse, the Bluetooth chip continues to perform S1907.

S1910: The Bluetooth chip controls the BT GPIO 1 and the BT GPIO 2 to be at a low level, to respectively power off the Bluetooth chip and the UWB chip.

In a power-off state, when the BT GPIO 1 and the BT GPIO 2 of the Bluetooth chip are at the low level, BT_EN of the Bluetooth chip and UWB _EN of the UWB chip that are respectively connected to the Bluetooth chip are also switched to a low level to power off.

S1911: The Bluetooth chip verifies whether the first device and the third device log in to a same account; and if the verification fails, S1909 and S1910 are performed after S1912; or if the verification succeeds, S1909 and S1910 are performed after S1913 and S1914.

S1912: The Bluetooth chip terminates the Bluetooth connection to the third device.

In view of this, when the mobile phone and the third device do not log in to the same account, the mobile phone may terminate the Bluetooth connection to the third device, so that security of location information of the first device is ensured, and a battery level of the mobile phone is saved to a maximum extent.

S1913: The Bluetooth chip controls the UART 2 to be at the high level, to indicate the UWB chip to start the UWB distance and angle measurement process.

For example, when receiving a UWB distance and angle measurement instruction sent by the third device, the Bluetooth chip may control the UART 2 to be at the high level, to indicate the UWB chip to start the UWB distance and angle measurement process. In view of this, the UART 2 of the Bluetooth chip may play a function of a GPIO, to trigger the UWB chip to start the UWB distance and angle measurement process by using a specified distance and angle measurement parameter (for example, the first distance and angle measurement parameter).

S1914: The UWB chip performs distance and angle measurement, so that the third device obtains an accurate location of the mobile phone.

For example, the UWB chip may perform distance and angle measurement based on but not limited to one or more of the following methods: a TDOA positioning method, a TOA positioning method, an AOA positioning method, and the like. This is not specifically limited in embodiments of this application. Refer to a conventional technology.

In some embodiments, the third device may be mainly responsible for distance and angle measurement, and the mobile phone (namely, the first device) may cooperate with the third device to complete a distance and angle measurement-related task. In some other embodiments, the mobile phone (namely, the first device) may be mainly responsible for distance and angle measurement, and the third device may cooperate with the mobile phone to complete a distance and angle measurement-related task. In embodiments of this application, a main responsible party for distance and angle measurement is not limited, and is determined based on a specific situation.

In some embodiments, as shown in FIG. 19A, after S1914 is completed, the Bluetooth chip may directly perform S1909 and S1910, to avoid excessive battery level consumption caused by continuous operation of the Bluetooth chip and the UWB chip of the mobile phone, thereby conserving power. Certainly, in some embodiments, after S1914 is completed, the Bluetooth chip may first perform S1912 and then perform S1909 and S1910, to conserve power.

It may be understood that, based on the device enabling process shown in FIG. 19A and FIG. 19B, a pin connection relationship between the Bluetooth chip and the UWB chip is improved, so that the Bluetooth chip manages a working status of the Bluetooth chip and the UWB chip, to supply power to and enable a communication chip of a powered-off terminal device based on existing hardware (for example, the power conversion module, the processor, the battery, and the Bluetooth chip) of the first device at extremely low costs, resulting in a simple and time-efficient improvement process. This solution has low costs and the simple and time-efficient improvement process, and therefore does not affect a production cycle of the terminal device, compared with the solution of adding an AOP shown in FIG. 1. Alternatively, even if the power conversion module in the first device is a newly added hardware module, due to a simple function to be implemented by the power conversion module, a simple product structure, and the like, a product is mature and costs are usually extremely low. Therefore, the solution can supply power to and enable a communication chip of a powered-off terminal device at extremely low costs, without affecting a production cycle of the terminal device, compared with the solution of adding an AOP shown in FIG. 1. In addition, the lost first device can be located more precisely through distance and angle measurement, to help the user find the first device more quickly.

In some embodiments, to help the user find the lost first device more quickly, the first device may further support supplying power to and enabling an audio amplifier (for example, a smart PA) after the first device is powered off, so that the audio amplifier can play a ringtone at a preset high volume, thereby facilitating the user to successfully find the first device.

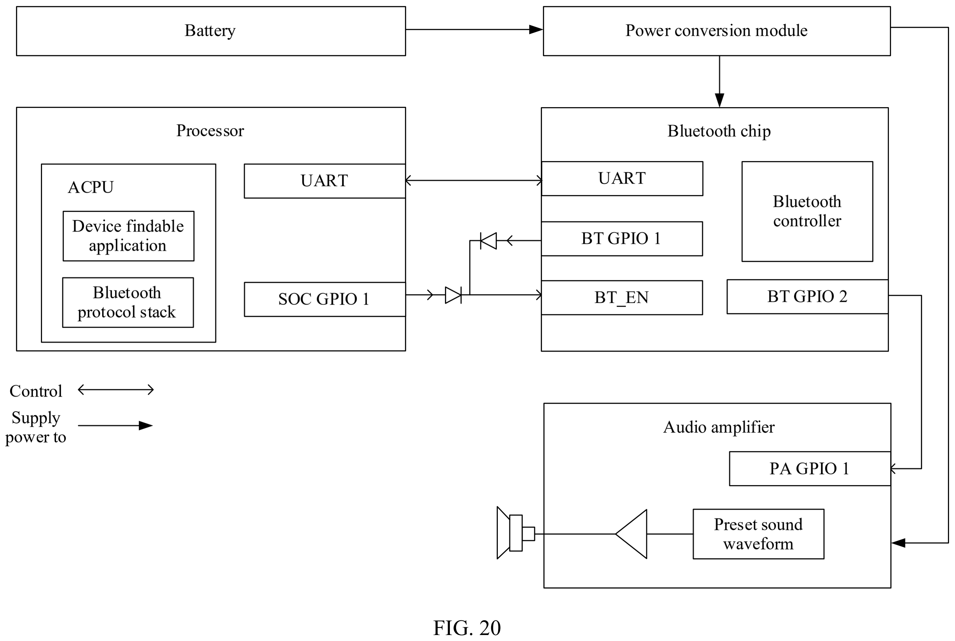

FIG. 20 shows a diagram of another enabling architecture of the first device according to this embodiment of this application. As shown in FIG. 20, the first device may include a battery, a processor, the power conversion module, a Bluetooth chip, and the audio amplifier.

The processor includes an ACPU, and the ACPU includes a device findable application and a Bluetooth protocol stack. The processor further includes a SOC GPIO 1 and a UART. The power conversion module is, for example, an LDO. The Bluetooth chip includes a Bluetooth controller (for example, a BT/BLE controller), a Bluetooth enable pin (for example, BT_EN), a UART, and a BT GPIO 1. For specific descriptions of the foregoing modules in the processor, the power management module, and the Bluetooth chip, refer to the descriptions of FIG. 16 in the foregoing embodiment. Details are not described herein again.

As shown in FIG. 20, the Bluetooth chip further includes a BT GPIO 2, used to indicate, by maintaining a high level, the audio amplifier to ring, or indicate, by maintaining a low level, the audio amplifier to stop ringing.

The audio amplifier includes an audio amplifier general-purpose input/output interface, for example, a PA GPIO 1, used to trigger ringing or stop ringing as indicated by the Bluetooth chip. The audio amplifier further includes a power amplifier, configured to amplify power of a sound waveform. As shown in FIG. 20, after amplifying power of a preset sound waveform in the audio amplifier to preset power, the audio amplifier may play a ringtone at a high volume by using an external speaker, so that the user can successfully find the first device.

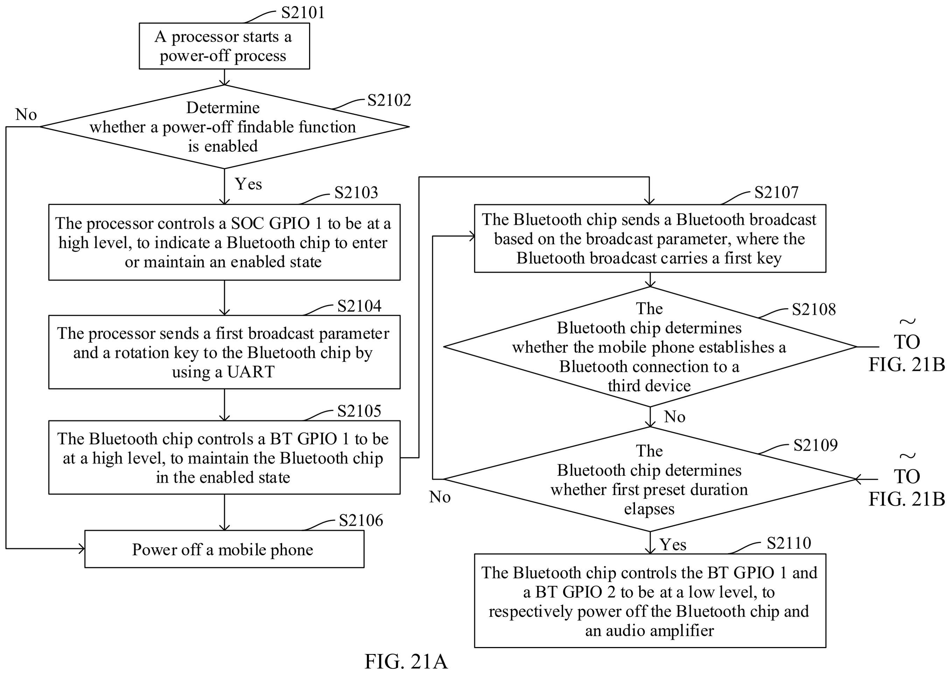

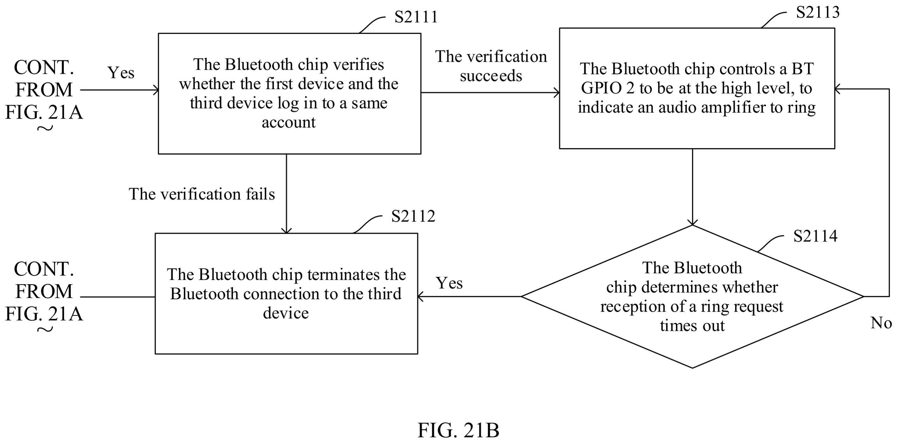

The enabling architecture shown in FIG. 20 is used as an example. Based on an example in which the first device is a lost mobile phone, FIG. 21A and FIG. 21B are a diagram of another enabling process of the first device according to this embodiment of this application. As shown in FIG. 21A and FIG. 21B, an enabling process of the mobile phone may include S2101 to S2114.

S2101: The processor starts a power-off process.

S2102: The processor determines whether a power-off findable function is enabled; and if the function is enabled, S2103 to S2114 are performed; or if the function is not enabled, S2106 is directly performed.

S2103: The processor controls the SOC GPIO 1 to be at a high level, to indicate the Bluetooth chip to enter or maintain an enabled state.

It should be noted that, in the enabling process shown in FIG. 21A and FIG. 21B, only an example is used in which the Bluetooth chip is not initially in the enabled state and the processor indicates, by controlling the SOC GPIO 1 to be at the high level, the Bluetooth chip to enter the enabled state. In some embodiments, for example, when the Bluetooth chip is initially in the enabled state, S2103 shown in FIG. 21A may alternatively be omitted.

S2104: The processor sends the first broadcast parameter and a rotation key to the Bluetooth chip by using the UART.

In some embodiments, after the Bluetooth chip receives the first broadcast parameter and the rotation key from the processor, the Bluetooth chip may alternatively disable the UART, to prevent the Bluetooth chip from mistakenly considering that data from the processor needs to be received after the mobile phone is powered off.

It should be noted that S2103 and S2104 may be simultaneously performed, or S2103 may be performed before S2104, or S2104 may be performed before S2103. This is not limited in embodiments of this application. However, S2104 needs to be performed before S2105, or S2104 needs to be performed before the processor is powered off.

S2105: The Bluetooth chip controls the BT GPIO 1 to be at a high level, to maintain the Bluetooth chip in the enabled state.

S2106: Power off the mobile phone.

S2107: The Bluetooth chip sends a Bluetooth broadcast based on the first broadcast parameter, where the Bluetooth broadcast carries the first key.

S2108: The Bluetooth chip determines whether the mobile phone establishes a Bluetooth connection to a third device; and if the mobile phone establishes the Bluetooth connection to the third device, S2111 is performed; or if the mobile phone does not establish the Bluetooth connection to the third device, S2109 is performed.

S2109: The Bluetooth chip determines whether first preset duration elapses; and if the first preset duration elapses, the Bluetooth chip performs S2110; or if the first preset duration does not elapse, the Bluetooth chip continues to perform S2107.

S2110: The Bluetooth chip controls the BT GPIO 1 and the BT GPIO 2 to be at a low level, to respectively power off the Bluetooth chip and the audio amplifier.

In a power-off state, when the BT GPIO 1 and the BT GPIO 2 of the Bluetooth chip are at the low level, BT_EN of the Bluetooth chip and the PA GPIO 1 of the audio amplifier that are respectively connected to the Bluetooth chip are also switched to a low level to power off.

S2111: The Bluetooth chip verifies whether the first device and the third device log in to a same account; and if the verification fails, S2109 and S2110 are performed after S2112; or if the verification succeeds, S2113 and S2114 are performed.

S2112: The Bluetooth chip terminates the Bluetooth connection to the third device.

S2113: The Bluetooth chip controls the BT GPIO 2 to be at the high level, to indicate the audio amplifier to ring.

For example, when receiving a ring instruction sent by the third device, the Bluetooth chip may control the BT GPIO 2 to be at the high level, to indicate the audio amplifier to ring.

S2114: The Bluetooth chip determines whether reception of a ring request times out; and if the reception does not time out, S2113 is performed; or if the reception times out, S2109 and S2110 are performed after S2112.

In some embodiments, the Bluetooth chip may alternatively not perform S2112 when reception of the ring request times out, but directly perform S2109 and S2110. This is not specifically limited in embodiments of this application.

This can avoid excessive battery level consumption caused by continuous ringing of the mobile phone, and avoid noise caused by continuous ringing of the mobile phone to an environment.

It may be understood that, based on the device enabling process shown in FIG. 21A and FIG. 21B, a pin connection relationship between the Bluetooth chip and the audio amplifier is improved, so that the Bluetooth chip manages a working status of the Bluetooth chip and the audio amplifier, to supply power to and enable a communication chip of a powered-off terminal device based on existing hardware (for example, the power conversion module, the processor, the battery, and the Bluetooth chip) of the first device at extremely low costs, resulting in a simple and time-efficient improvement process. This solution has low costs and the simple and time-efficient improvement process, and therefore does not affect a production cycle of the terminal device, compared with the solution of adding an AOP shown in FIG. 1. Alternatively, even if the power conversion module in the first device is a newly added hardware module, due to a simple function to be implemented by the power conversion module, a simple product structure, and the like, a product is mature and costs are usually extremely low. Therefore, the solution can supply power to and enable a communication chip of a powered-off terminal device at extremely low costs, without affecting a production cycle of the terminal device, compared with the solution of adding an AOP shown in FIG. 1. In addition, supplying power to and enabling the audio amplifier may support the lost first device in playing a ringtone at a preset high volume, to help the user find the first device more quickly.

It should be noted that the several enabling architectures described in Embodiment 1 and Embodiment 2 are merely examples. Neither specific hardware and software modules included in the first device nor connection relationships between the modules are limited in embodiments of this application. For example, the first device may further include another hardware module like a display. For another example, the battery of the first device may further supply power to another module like a processor.

In addition, interfaces or pins of the processor, the power management module, the power conversion module, the Bluetooth chip, the UWB chip, or the audio amplifier in the several enabling architectures described in Embodiment 1 and Embodiment 2 are merely used as examples, and are not specifically limited in embodiments of this application. For a terminal device whose other interfaces or pins can provide a corresponding enable/control function, the solutions provided in embodiments of this application are also applicable.

In addition, the enabling processes of the several mobile phones described in Embodiment 1 and Embodiment 2 are merely examples. In actual use, an execution sequence between some steps is not limited, and may be adaptively adjusted based on an actual device capability and a specific software implementation process. For example, S1106 and S1107 to S1109 shown in FIG. 11 may be performed synchronously or asynchronously; S1306 and S1307 to S1314 shown in FIG. 13B may be performed synchronously or asynchronously; S1506 and S1507 to S1515 shown in FIG. 15B may be performed synchronously or asynchronously; S1706 and S1707 to S1709 shown in FIG. 17 may be performed synchronously or asynchronously; S1906 and S1907 to S1914 shown in FIG. 19A and FIG. 19B may be performed synchronously or asynchronously; and S2106 and S2107 to S2114 shown in FIG. 21A and FIG. 21B may be performed synchronously or asynchronously. Alternatively, S1108 and S1109 shown in FIG. 11 may not be performed; S1309 and S1310 shown in FIG. 13A may not be performed; S1509 and S1510 or S1514 and S1515 shown in FIG. 15B may not be performed; S1708 and S1709 shown in FIG. 17 may not be performed; S1909 and S1910 shown in FIG. 19A may not be performed; or S2109 and S2110 or S2114 shown in FIG. 21A and FIG. 21B may not be performed.

It should be understood that the solutions in embodiments of this application may be properly combined for use, and explanations or descriptions of terms in embodiments may be cross-referenced or explained in embodiments. This is not limited.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

It may be understood that, to implement a function in any one of the foregoing embodiments, the terminal device (for example, the first device, the second device, or the third device) includes a corresponding hardware structure and/or software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the terminal device (for example, the first device, the second device, or the third device) may be divided into functional modules. For example, each functional module corresponding to each function may be obtained through division, or two or more functions may be integrated into one processing module. The integrated module may be implemented in a form of hardware, or may be implemented in a form of a software functional module. It should be noted that, in embodiments of this application, division into modules is an example, and is merely logical function division. In an actual implementation, another division manner may be used.

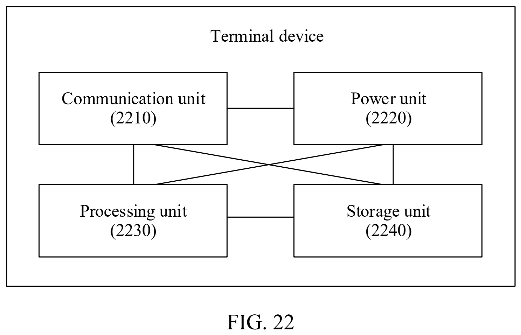

For example, as shown in FIG. 22, a terminal device (for example, a first device, a second device, or a third device) may include a communication unit 2210, a power unit 2220, a processing unit 2230, and a storage unit 2240 based on division into function modules. The communication unit 2210 is configured to: send and receive information, for example, send and receive a broadcast signal. The power unit 2220 is configured to: supply power to the communication unit 2210, the processing unit 2230, and the like when the terminal device is powered on, and supply power to the communication unit 2210 when the terminal device is powered off, so that the communication unit 2210 sends and receives the broadcast signal. The processing unit 2230 is configured to manage a communication protocol, deliver a communication strategy (such as a first broadcast parameter and a first distance and angle measurement parameter). The storage unit 2240 is configured to store computer program instructions, and data and the like created during use of the terminal device. Certainly, in some examples, the terminal device may alternatively include another unit, for example, an audio unit configured to play a ringtone. This is not specifically limited in embodiments of this application.

It should be further understood that each module in the terminal device may be implemented in a form of software and/or hardware. This is not specifically limited. In other words, the terminal device is presented in a form of a functional module. The "module" herein may be an application-specific integrated circuit ASIC, a circuit, a processor that executes one or more software or firmware programs and a memory, an integrated logic circuit, and/or another component that can provide the foregoing functions.

In an optional manner, when software is used for implementing data transmission, the data transmission may be completely or partially implemented in a form of a computer program product. The computer program product includes one or more computer instructions. When the computer program instructions are loaded and executed on a computer, the procedures or functions according to embodiments of this application are completely or partially implemented. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital video disk (digital video disk, DVD)), a semiconductor medium (for example, a solid-state disk solid-state disk (SSD)), or the like.

Methods or algorithm steps described in combination with embodiments of this application may be implemented by hardware, or may be implemented by a processor by executing software instructions. The software instructions may include a corresponding software module. The software module may be stored in a RAM memory, a flash memory, a ROM memory, an EPROM memory, an EEPROM memory, a register, a hard disk drive, a removable hard disk drive, a CD-ROM, or a storage medium in any other form well-known in the art. For example, the storage medium is coupled to the processor, so that the processor can read information from the storage medium and write information to the storage medium. Certainly, the storage medium may alternatively be a component of the processor. The processor and the storage medium may be disposed in an ASIC. In addition, the ASIC may be located in a terminal device. Certainly, the processor and the storage medium may exist as discrete components.

The foregoing descriptions about implementations allow a person skilled in the art to clearly understand that, for the purpose of convenient and brief description, division into the foregoing functional modules is used as an example for illustration. In an actual application, the foregoing functions can be allocated to different functional modules and implemented based on a requirement, that is, an inner structure of an apparatus is divided into different functional modules to implement all or some of the functions described above.

## Claims

1. A method for obtaining device location information, applied to a first device, wherein the first device comprises a battery, a power management module, a processor, and a communication chip; and the method comprises:
sending, by the processor, a first signal to the power management module in response to a first condition;
indicating, by the power management module based on the first signal, the communication chip to enter or maintain an enabled state, wherein
the first device is powered off after the processor is powered off; and
after the first device is powered off, the communication chip is in the enabled state; and
obtaining, by the communication chip, electric energy from the battery, and sending a broadcast signal based on a first broadcast parameter.

2. The method according to claim 1, wherein the processor comprises a first system power management interface, the power management module comprises a second system power management interface, and the first system power management interface is connected to the second system power management interface; and sending, by the processor, the first signal to the power management module comprises:
sending, by the processor, the first signal to the power management module through the first system power management interface.

3. The method according to claim 1 or 2, wherein the power management module comprises a first general-purpose input/output interface, the communication chip comprises a first enable pin, and the first general-purpose input/output interface is connected to the first enable pin; and
indicating, by the power management module based on the first signal, the communication chip to enter or maintain the enabled state comprises: indicating, by the power management module based on the first signal and through the first general-purpose input/output interface, the communication chip to enter or maintain the enabled state.

4. The method according to claim 3, wherein the first device further comprises a distance and angle measurement chip; and before the processor is powered off, the method further comprises:
indicating, by the power management module based on the first signal, the distance and angle measurement chip to enter or maintain an enabled state.

5. The method according to claim 4, wherein the power management module further comprises a fourth general-purpose input/output interface, the distance and angle measurement chip comprises a second enable pin, and the fourth general-purpose input/output interface is connected to the second enable pin; and
indicating, by the power management module based on the first signal, the distance and angle measurement chip to enter or maintain the enabled state comprises:
controlling, by the power management module based on the first signal, the fourth general-purpose input/output interface to indicate the distance and angle measurement chip to enter or maintain the enabled state.

6. The method according to claim 4 or 5, wherein the communication chip further comprises a first communication interface, the distance and angle measurement chip further comprises a second communication interface, and the first communication interface is connected to the second communication interface; and the method further comprises:
when a second condition is met, sending, by the communication chip, a distance and angle measurement indication to the distance and angle measurement chip through the first communication interface; and
cooperatively performing, by the distance and angle measurement chip, a distance and angle measurement task on the first device based on the distance and angle measurement indication and a first distance and angle measurement parameter.

7. The method according to claim 6, wherein
obtaining, by the communication chip and the distance and angle measurement chip from the power management module, the electric energy from the battery.

8. The method according to claim 3, wherein the first device further comprises an audio amplifier and a speaker, the audio amplifier is connected to the speaker, the communication chip comprises a fifth general-purpose input/output interface, the audio amplifier comprises a sixth general-purpose input/output interface, and the fifth general-purpose input/output interface is connected to the sixth general-purpose input/output interface; and the method further comprises:
when a second condition is met, indicating, by the communication chip through the fifth general-purpose input/output interface, the audio amplifier to play a ringtone by using the speaker, wherein the audio amplifier obtains, from the power management module, the electric energy from the battery.

9. The method according to claim 8, wherein a sound waveform is preset in the audio amplifier, and the ringtone played by the speaker is a ringtone corresponding to the sound waveform.

10. The method according to any one of claims 6 to 9, wherein that the second condition is met comprises:
a preset indication is received from a third device, wherein
the first device establishes a communication connection to the third device.

11. The method according to claim 10, wherein that the second condition is met further comprises:
the third device and the first device log in to a same cloud server account.

12. The method according to any one of claims 1 to 11, wherein the method further comprises:
sending, by the processor, the first broadcast parameter to the communication chip in response to the first condition, wherein
the first condition comprises: the first device receives a power-off operation, or a battery level of the first device is less than a preset battery level threshold, or a preset condition is met.

13. A method for obtaining device location information, applied to a first device, wherein the first device comprises a battery, a processor, and a communication chip, the processor comprises a seventh general-purpose input/output interface, the communication chip comprises a first enable pin and an eighth general-purpose input/output interface, the seventh general-purpose input/output interface is connected to the first enable pin, and the eighth general-purpose input/output interface is connected to the first enable pin; and the method comprises:
in response to a first condition, indicating, by the processor through the seventh general-purpose input/output interface, the communication chip to enter or maintain an enabled state, wherein
the first device is powered off after the processor is powered off;
after the first device is powered off, maintaining, by the communication chip, the first enable pin at a high level through the eighth general-purpose input/output interface, so that the communication chip is in the enabled state; and
obtaining, by the communication chip, electric energy from the battery, and sending a broadcast signal based on a first broadcast parameter.

14. The method according to claim 13, wherein the first device further comprises a distance and angle measurement chip, the communication chip further comprises a ninth general-purpose input/output interface, the distance and angle measurement chip comprises a third enable pin, and the ninth general-purpose input/output interface is connected to the third enable pin; and the method further comprises:
after the first device is powered off, controlling, by the communication chip through the ninth general-purpose input/output interface, the distance and angle measurement chip to be in an enabled state.

15. The method according to claim 14, wherein the communication chip further comprises a first communication interface, the distance and angle measurement chip further comprises a second communication interface, and the first communication interface is connected to the second communication interface; and the method further comprises:
when a second condition is met, sending, by the communication chip, a distance and angle measurement indication to the distance and angle measurement chip through the first communication interface; and
cooperatively performing, by the distance and angle measurement chip, a distance and angle measurement task on the first device based on the distance and angle measurement indication and a first distance and angle measurement parameter.

16. The method according to claim 15, wherein the first device further comprises a power conversion module, and the communication chip and the distance and angle measurement chip obtain, from the power conversion module, the electric energy from the battery.

17. The method according to claim 13, wherein the first device further comprises an audio amplifier and a speaker, the audio amplifier is connected to the speaker, the communication chip comprises a fifth general-purpose input/output interface, the audio amplifier comprises a sixth general-purpose input/output interface, and the fifth general-purpose input/output interface is connected to the sixth general-purpose input/output interface; and the method further comprises:
when a second condition is met, indicating, by the communication chip through the fifth general-purpose input/output interface, the audio amplifier to play a ringtone by using the speaker, wherein the audio amplifier obtains, from a power conversion module, the electric energy from the battery.

18. The method according to claim 17, wherein a sound waveform is preset in the audio amplifier, and the ringtone played by the speaker is a ringtone corresponding to the sound waveform.

19. The method according to claim 15 or 17, wherein that the second condition is met comprises:
a preset indication is received from a third device, wherein
the first device establishes a communication connection to the third device.

20. The method according to claim 19, wherein that the second condition is met further comprises:
the third device and the first device log in to a same cloud server account.

21. The method according to any one of claims 13 to 20, wherein the method further comprises:
sending, by the processor, the first broadcast parameter to the communication chip in response to the first condition, wherein
the first condition comprises: the first device receives a power-off operation, or a battery level of the first device is less than a preset battery level threshold, or a preset condition is met.

22. A terminal device, wherein the terminal device comprises a battery, a power management module, a processor, and a communication chip, and the terminal device is configured to implement the method according to any one of claims 1 to 12.

23. A terminal device, wherein the terminal device comprises a battery, a power conversion module, a processor, and a communication chip, and the terminal device is configured to implement the method according to any one of claims 13 to 21.

24. A computer-readable storage medium, wherein the computer-readable storage medium stores computer program instructions, and when the computer program instructions are executed by a processing circuit, the method according to any one of claims 1 to 12 or claims 13 to 21 is implemented.

25. A computer program product comprising instructions, wherein when the computer program product runs on a computer, the computer is caused to perform the method according to any one of claims 1 to 12 or claims 13 to 21.

26. A chip system, wherein the chip system comprises a processing circuit and a storage medium, the storage medium stores computer program instructions, and when the computer program instructions are executed by the processing circuit, the method according to any one of claims 1 to 12 or claims 13 to 21 is implemented.
